# EUROPEAN PATENT APPLICATION

(11) **EP 1 098 476 A1**
(43) Date of publication of application: **09.05.2001**
(21) Application number: 00925630.6
(22) Date of filing: 11.05.2000
(51) Int. Cl.: H04L 12/28, G06F 13/00

(54) **NETWORK CONNECTION RECOGNIZING METHOD AND NETWORK-CONNECTED TERMINAL DEVICE**

(30) Priority: 11.05.1999 JP 13032599
(71) Applicant: Sony Corporation, Tokyo 141-0001 (JP)
(72) Inventor: MIZUTANI, Masao, Sony Corporation, Tokyo 141-0001 (JP); UCHIDA, Yoshimi, Sony Corporation, Tokyo 141-0001 (JP)
(74) Representative: Pratt, Richard Wilson
(86) International application number: JP0003033
(87) International publication number: WO0069123

(57) **Abstract**

In the case where a plurality of devices are connected to a predetermined network, recognition work at the time of, for example, bus resetting of devices connected to the network is facilitated by discriminating the opposite party connected via the network in recognizing a device connected to the network, then comparing predetermined data obtained from the discriminated opposite party with predetermined previously collected and stored, judging upon coincidence the device to be a previously connected device, and using data concerning the device collected when previously connected, as data of the device in recognition.

## Description

### TECHNICAL FIELD

The present invention relates to a network connection recognition method suited for recognizing a device connected by a bus line of, for example, the IEEE (The Institute of Electrical and Electronics Engineers) 1394 scheme, and a terminal device for network connection to which this network recognition method has been applied.

### BACKGROUND ART

AV devices capable of transmitting information to each other via a network using a serial data bus of the IEEE 1394 scheme have been developed. In this network, an AV device connected to the network can be controled by using a predetermined command (AV/C Command Transaction Set). In the ensuing description, this command is referred to as AV/C command. Details of the AV/C Command will be described later.

As conventional AV devices connected via the bus line of the IEEE 1394 scheme, there are digital video camera devices and digital video tape recording and playback devices of, for example, a standard called DV scheme. In other words, two recording and playback devices are prepared and connected via a bus line which conforms to the IEEE 1394 scheme. Digital video data reproduced from one device is transmitted by this bus line and recorded by the other device.

By thus connecting AV devices via the bus line of the IEEE 1394 scheme, large capacity data such as digital video data can be transmitted in real time and editing of video data or the like can be conducted efficiently. Data which can be transmitted via the bus line of the

IEEE 1394 scheme is not limited to the above described digital video data, but various kinds of other digital data can be transmitted. Various data handled by AV devices can be transmitted. In other words, a large number of devices (for example, 63 devices) can be connected to one network via the bus line of the IEEE 1394 scheme. Among a large number of devices, video data, audio data, and control data can be transmitted.

For example, it becomes possible to connect an IRD (Integrated Receiver Decoder) serving as a receiving device for receiving digital satellite broadcast to a digital video tape recording and playback device referred to as DVCR (Digital Video Cassette Recorder) using a magnetic tape as a recording medium via the bus line of the IEEE 1394 scheme, and record video data received by the IRD, by using the DVCR. Furthermore, it becomes possible to connect a digital audio disc recording and playback device using an magneto-optical disc called MD (Mini Disc) as a recording medium to the same bus line, and record audio data received by the IRD, by using the audio disc recording and playback device (MD device).

In the case where a large number of devices are thus connected to one network, a device for controlling data transmission within the network in the IEEE 1394 scheme provides all devices in the network with individual node IDs, and manages the transmitting source and receiving destination by using the node IDs. As a result, data transmission between specific devices in the network becomes possible.

Besides provision of the above described node IDs, the device for controlling the data transmission in the network needs to discriminate the kind of each of connected devices and effect control according to the discriminated kind. For example, in the case of a device corresponding to a command such as the above described AV/C command, it is necessary to transmit a predetermined command or the like prescribed in the scheme, transmit data concerning the function possessed by each device, and collect the transmitted data.

The work of provision of the node ID and discrimination of the device kind is conducted when the bus line included in the network is reset. The bus line is reset when there is an alteration in devices connected to the bus line, besides when a new network is formed. In the case where the network configuration is altered at any time, there is a possibility that bus reset is applied frequently.

In the case where the number of devices connected to the bus line included in the network is large as described above, there is a problem that a heavy burden is cast upon the work of collecting data of all devices and the time required for the processing also becomes long.

### DISCLOSURE OF THE INVENTION

An object of the present invention is to simplify the work of discriminating a device at the time of bus resetting or the like, in the case where a network of the IEEE 1394 scheme or the like is formed.
A first invention is a network connection recognition method for recognizing a device connected to a predetermined network, including: a device recognition step of recognizing a device connected to the network; a data acquisition step of acquiring predetermined data from the recognized device; and a comparison step of comparing the predetermined data obtained from the recognized device with predetermined data previously collected and stored, wherein when in the comparison step the predetermined data obtained from the recognized device has coincided with the predetermined data previously collected and stored, data concerning a device corresponding to the stored predetermined data is utilized as data concerning the recognized device. Therefore, by comparing predetermined data transmitted from the recognized device With stored data, judging upon coincidence the device to be a previously connected device, and using data concerning the device previously collected and stored, it becomes unnecessary to collect data concerning the device from the device.
A second invention is the network connection recognition method of the first invention,
   wherein the predetermined data is an identifier capable of identifying each device individually. By doing so, a device can be discriminated simply by using an identifier.
A third invention is the network connection recognition method of the first invention,
   including a data collection step of collecting data concerning the device when the predetermined data obtained from the recognized device has not coincided with predetermined data previously collected and stored. By doing so, the step of collecting data concerning the device is executed only for a device newly connected to the network. The time and processes required for data collection can thus be reduced.
A fourth invention is the network connection recognition method of the third invention,
   wherein the data collection step includes: an inquiry command sending step of sending a command for inquiring a unit type or a subunit type to the device; and
   a discriminating step of discriminating the unit type or the subunit type of the device based on a response from the device. By doing so, it becomes possible to certainly know the unit type or subunit type implemented in the device.
A fifth invention is the network connection recognition method of the fourth invention,
   wherein the data collection step further includes:
   a type corresponding command sending step of sending a command corresponding to the discriminated type; and
   a device kind determining step for determining the device kind based on a response obtained by the type corresponding command sending step. By doing so, it becomes possible to discriminate the device connected to the network more certainly by the type corresponding command sending step and device kind determining step.
A sixth invention is the network connection recognition method of the first invention, wherein the device recognition step of recognizing a device connected to the network is conducted when a bus line forming the network is reset. By doing so, it becomes possible to conduct data collection of each device at the time of bus resetting, for example, in the case where the network configuration is changed, with a reduced burden in a short time.
A seventh invention is the network connection recognition method of the first invention,
   including data deleting step of deleting the stored predetermined data when predetermined data previously collected and stored does not coincide with any of the predetermined data obtained from the recognized device. By doing so, storage of predetermined data concerning devices which have been disconnected from the network is deleted. Data which are not required for control of devices in the network are thus deleted efficiently.
An eighth invention is the network connection recognition method of the first invention,
   including data deleting step of deleting data concerning a device corresponding to the stored predetermined data when predetermined data previously collected and stored does not coincide with any of the predetermined data obtained from the recognized device. By doing so, storage of the data concerning devices which have been disconnected from the network is deleted. Data which are not required for control of devices in the network are thus deleted efficiently.
A ninth invention is a network connection terminal device connected to a predetermined network, the network connection terminal device including:
   a storage section for storing data concerning a device connected via the network; and
   a control section responsive to recognition of a device connected via the network, for comparing predetermined data transmitted from the device with data stored in the storage section, causing data concerning devices incurring noncoincidence in the comparison to be transmitted, and causing stored data of the storage section to be updated. When a device which does not coincide with predetermined data stored in the storage section is recognized, therefore, data concerning the device is acquired. It thus becomes possible to collect only the data concerning newly connected devices efficiently and simply.
A tenth invention is a network connection terminal device connected to a predetermined network, the network connection terminal device including:
   device recognition means for recognizing a device connected to the network;
   data acquisition means for acquiring predetermined data from the recognized device; and
   comparison means for comparing the predetermined data obtained from the recognized device with predetermined data previously collected and stored,
      wherein when in the comparison means the predetermined data obtained from the recognized device has coincided with the predetermined data previously collected and stored, data concerning a device corresponding to the stored predetermined data is utilized as data concerning the recognized device. Therefore, by comparing predetermined data transmitted from the recognized device with stored data, judging upon coincidence the device to be a previously connected device, and using data concerning the device previously collected and stored, it becomes unnecessary to collect data concerning the device from the device. Thus, the burden required for data collection from the devices connected to the network can be reduced. In addition, a terminal device capable of shortening the time required for the processing is obtained.
An eleventh invention is the network connection terminal device of the tenth invention, wherein the predetermined data is an identifier capable of identifying each device individually. By doing so, a device can be discriminated simply by using an identifier.
A twelfth invention is the network connection terminal device of the tenth invention, including:
   command output means for generating and outputting a first command to inquire of a device connected via the network about a unit type or a subunit type; and
   discrimination means for receiving a response to the first command, and discriminating a unit type or a subunit type of the device based on the response. By doing so, it becomes possible to certainly know the unit type or subunit type implemented in the connected device.
A thirteenth invention is the network connection terminal device of the twelfth invention, including:
   command output means for generating and outputting a second command corresponding to a unit type or a subunit type of the device; and
   receiving means for receiving a response to the second command from the device. By doing so, it becomes possible to discriminate the device connected to the network more certainly by generation of the first command and the second command in the command output means.
A fourteenth invention is the network connection terminal device of the tenth invention,
   wherein the device recognition means conducts processing for recognizing a device connected via the network when the device recognition means has detected that a bus line forming the network is reset. By doing so, it becomes possible to conduct data collection of each connected device at the time of bus resetting, for example, in the case where the network configuration to which the terminal device is connected is changed, with a reduced burden in a short time.

### BRIEF DESCRIPTION OF DRAWINGS

FIG. 1 is a block diagram showing a configuration example of a whole system according to an embodiment of the present invention.
FIG. 2 is a block diagram showing a configuration example of a digital satellite broadcast receiver.
FIG. 3 is a block diagram showing a configuration example of a video recording and playback device.
FIG. 4 is a block diagram showing a configuration example of an audio recording and playback device.
FIG. 5 is a diagram showing an example of a frame structure prescribed by the IEEE 1394 scheme.
FIG. 6 is a diagram showing an example of a structure of an address space of the CRS architecture.
FIG. 7 is a diagram showing examples of positions, names, and functions of principal CRSs.
FIG. 8 is a diagram showing configuration examples of plug control registers.
FIG. 9 is a diagram showing configuration examples of oMPR, oPCR, iMPR, and iPCR.
FIG. 10 is a diagram showing an example of relations among plugs, plug control registers, and transmission channels.
FIG. 11 is a diagram showing an example of a data structure using a hierarchical structure of descriptors.
FIG. 12 is a diagram showing an example of a data structure of descriptors.
FIG. 13 is a diagram showing an example of a generation ID of FIG. 12.
FIG. 14 is a diagram showing an example of a list ID of FIG. 12.
FIG. 15 is a diagram showing an example of a stack model of an AV/C command.
FIG. 16 is a diagram showing an example of a relation between commands and responses of an AV/C command.
FIG. 17 is a diagram showing an example of a relation between commands and responses of an AV/C command in more detail.
FIG. 18 is a diagram showing an example of a data structure of an AV/C command.
FIG. 19 is a diagram showing a concrete example of an AV/C command.
FIG. 20 is a diagram showing concrete examples of a command and a response of an AV/C command.
FIG. 21 is a flow chart showing an example of device discrimination processing according to an embodiment of the present invention.
FIG. 22 is a flow chart showing an example of device information acquisition processing according to an embodiment of the present invention.
FIG. 23 is a diagram showing an example of a device information table according to an embodiment of the present invention.
FIG. 24 is a diagram showing an example of a format of a subunit-info-command according to an embodiment of the present invention.
FIG. 25 is a diagram showing an example of a format of a response to a subunit-info-command according to an embodiment of the present invention.
FIG. 26 is a diagram showing an example of a format of a unit-info-command according to an embodiment of the present invention.
FIG. 27 is a diagram showing an example of a format of a response to a unit-info-command according to an embodiment of the present invention.
FIG. 28 is a diagram showing an example of a subunit type according to an embodiment of the present invention.
FIG. 29 is a diagram showing an example of a format of an open descriptor command according to an embodiment of the present invention.
FIG. 30 is a diagram showing an example of a format of a read descriptor command according to an embodiment of the present invention.
FIG. 31 is a diagram showing an example of a descriptor of a disc subunit according to an embodiment of the present invention.
FIG. 32 is a diagram showing a data configuration example of a medium type of a disc subunit descriptor.
FIG. 33 is a diagram showing an example of a format of a tape playback command according to an embodiment of the present invention.
FIG. 34 is a diagram showing a format example of a response to a tape playback command according to an embodiment of the present invention.
FIG. 35 is a diagram showing an example of a unit directory according to another embodiment of the present invention.
FIG. 36 is a diagram showing an example of correspondence between protocols and command sets according to another embodiment of the present invention.
FIG. 37 is a diagram showing an example of a CTS code according to another embodiment of the present invention.

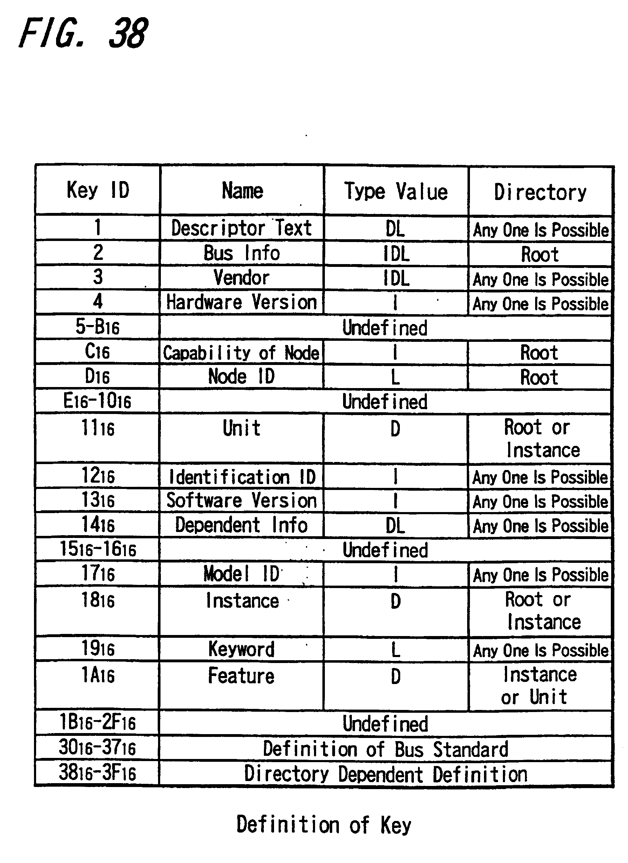

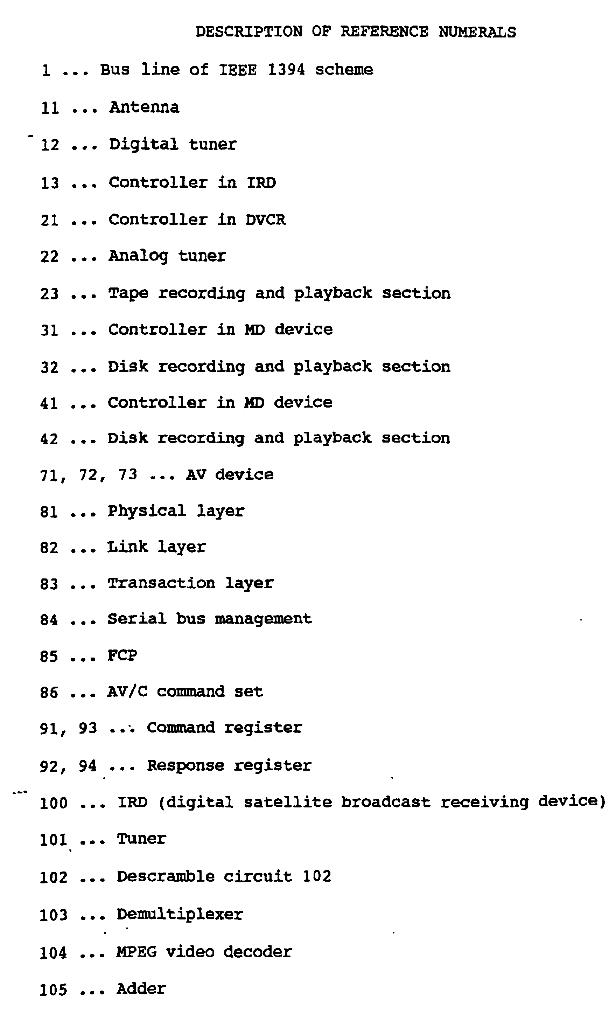

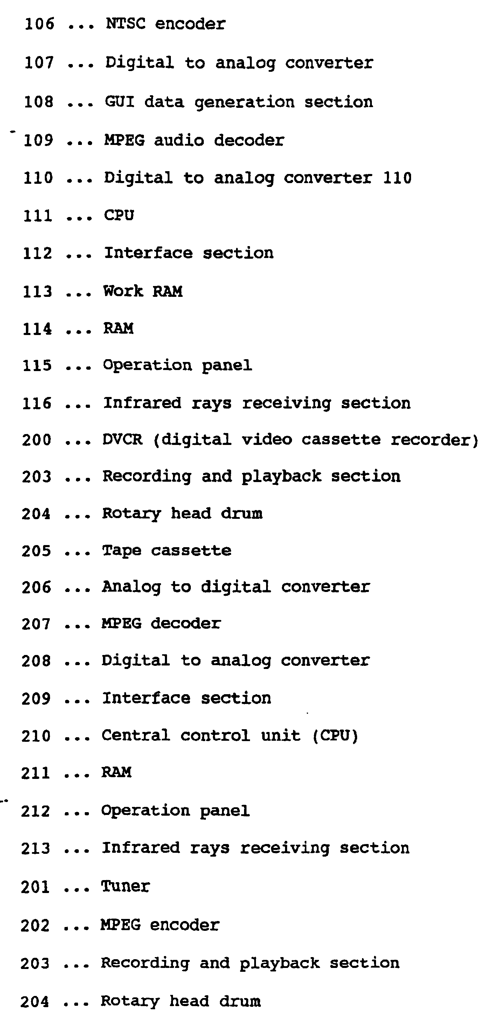

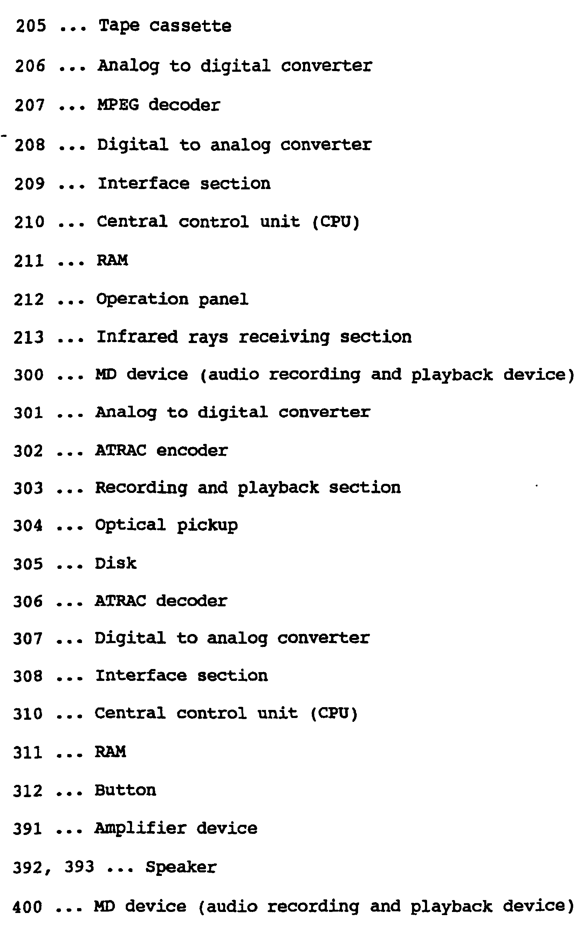

FIG. 38 is a diagram showing an example of key data according to still another embodiment of the present invention.

### BEST MODE FOR CARRYING OUT THE INVENTION

Hereafter, an embodiment of the present invention will be described by referring to accompanying drawing.

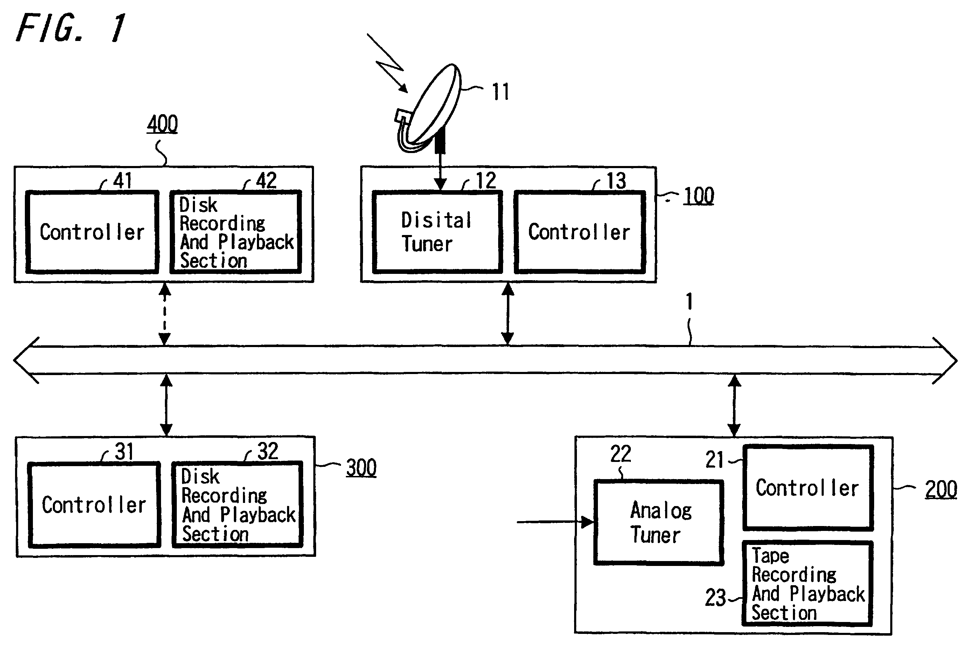

A configuration example of a network system to which the present invention has been applied will now be described by referring to FIG. 1. In this network system, a plurality of devices are connected via a serial data bus 1 (hereafter referred to simply as bus 1) of the IEEE 1394 scheme. In FIG. 1, there is shown an example in which four AV devices 100, 200, 300 and 400 are prepared and three AV devices 100, 200 and 300 among them are connected. It is now assumed that devices connected to the bus 1 are devices each having a terminal for connection to a bus of the IEEE 1394 scheme, and the devices are an IRD (Integrated Receiver Decoder) 100 serving as a digital satellite broadcast receiver, a DVCR (Digital Video Cassette Recorder) 200 serving as a digital video recording and playback device, and an MD (Mini Disc) device 300 serving as a digital audio recording and playback device. In the state shown in FIG. 1, two MD (Mini Disc) devices 300 and 400 are prepared, and only the first MD device 300 is connected to the bus 1. The second MD device 400 is not connected to the bus 1 at this time.

Here, electronic devices such as the IRD 100, DVCR 200, and MD devices 300 and 400 which can be connected to the bus 1 are called units. Between units, information stored in the units can be mutually read and written by using a command and a descriptor prescribed by AV/C Digital Interface Command Set General Specification (hereafter referred to as AV/C command) of the AV/C Command Transaction Set. Details of the AV/C command are described in AV/C Digital Interface Command Set General Specification opened to the public in 1394 Trade Association. In the AV/C command, each of functions that the unit has is called subunit. Furthermore, each of functions that the unit has is called subunit.

The IRD 100 for receiving and decoding digital satellite broadcast or the like has a parabolic antenna 11 connected thereto. A digital tuner 12 connected to the parabolic antenna 11 conducts processing for receiving a signal of a predetermined channel and decoding it. In this case, a controller 13 incorporated in the IRD 100 effects control concerning the receiving operation such as receiving and decoding.

As channels that the IRD 100 can receive, there are audio channels from which only audio data such as tunes are obtained, and data channels from which various data such as data for web perusal of the Internet are obtained, besides video channels (so-called channels for ordinary television broadcast) from which video data and audio data annexed to the video data are obtained. As audio data transmitted by audio channels, there are audio data modulated by a typical method such as the MPEG scheme, and channels from which audio data subjected to high efficiency compression encoding such as ATRAC (Adaptive Transform Acoustic Coding) scheme are obtained.

Furthermore, data transmission with the IRD 100 via the bus 1 is also controlled by the controller 13. In data transmission via the bus 1, the controller 13 is adapted to be able to control operation of other devices 200 and 300 connected by the bus 1 by using commands prescribed in the above described AV/C command. For example, the controller 13 can transmit video data and audio data of a video channel received by the IRD 100 to the DVCR 200, and control the recording operation in the DVCR 200 to record video data and the like on a video tape in a video cassette mounted thereon. Thus video recording can be performed. Furthermore, the controller 13 transmits audio data of an audio channel received by the IRD 100 to the MD device 300, and controls audio recording operation in the MD device 300 to record audio data on a magneto-optical disc mounted thereon. When conducting manual reservation operation for the video or audio recording on the IRD 100, it is also possible to, for example, display a program guide picture for EPG (Electric Program Guide) on a television receiver (not shown) connected to the IRD 100 and perform reservations by manually operating a GUI (Graphical User Interface) on the basis of the display of the program guide picture on the screen.

The DVCR 200 is a tape recording and playback device capable of recording video data, audio data, and data annexed to them on a videotape as digital data and reproducing those data from the videotape. Herein, it is assumed that the DVCR 200 is a recording and playback device using a medium having a format called D-VHS. A controller 21 of the DVCR 200 accepts user's manual operation for ordering video recording or playback or manual operation for reserving video recording, and controls the whole DVCR 200. On the basis of the control of the controller 21, an analog tuner 22 extracts a signal of a predetermined channel from inputted analog signals, converts the signal to digital data, and supplies the digital data to a tape recording and playback section 23. The tape recording and playback section 23 records video data and audio data supplied from the analog tuner 22, or video data and audio data supplied from the IRD 100 or the like via the bus 1 on a video tape.

The MD device 300 is a disc recording and playback device capable of recording audio data and data annexed to the audio data on a magneto-optical disc having a format called mini disc (MD) as digital data and of reproducing the digital data therefrom. A controller 31 of the MD device 300 accepts user's manual operation for ordering audio recording or playback or manual operation for reserving audio recording, and controls the whole MD device 300. A disc recording and playback section 32 records audio data and so on inputted from the bus 1 or another input section on a magneto-optical disc. As for recording on the disc in this case, the audio data and so on are recorded as data subjected to compression encoding by using the ATRAC scheme. If audio data transmitted via the bus 1 is data of the ATRAC scheme, therefore, the transmitted audio data is recorded on the disc as it is.

The MD device 400 which is not connected to the bus 1 in the state illustrated in FIG. 1 is also a disc recording and playback device having basically the same configuration as that of the MD device 300. In other words, the MD device 400 is a disc recording and playback device capable of recording audio data and data annexed to the audio data on a magneto-optical disc having a format called mini disc (MD) as digital data and of reproducing the digital data therefrom. The MD device 400 includes a controller 41 and a disc recording and playback section 42. In addition, the MD device 400 includes a terminal for connection to the bus 1. When this terminal is connected to the bus 1, the MD device 400 can conduct data transmission via the bus 1.

Each of the controllers 13, 21, 31 and 41 respectively of the devices 100, 200, 300 and 400 includes a storage section for storing an AV/C descriptor set for the device. In addition, data such as a command required to read and write the descriptor are also stored in the storage section.

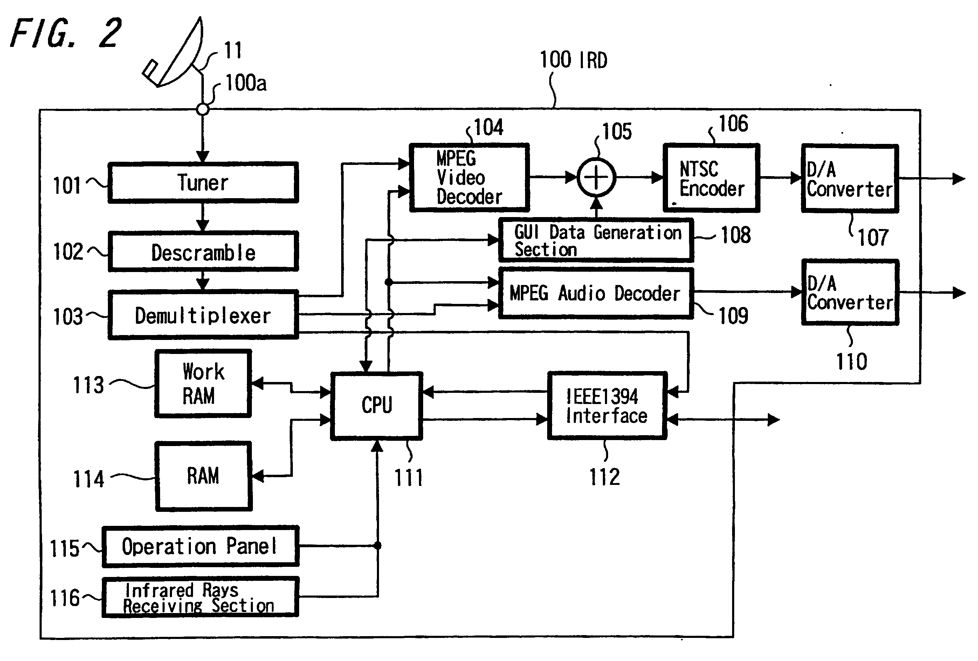

FIG. 2 is a diagram showing a concrete configuration example of the IRD 100. A broadcast radio wave from a satellite is received by the antenna 8, inputted to a terminal 100a, and supplied to a tuner 101 serving as program selection means provided in the IRD 100. In the IRD 100, respective circuits operate under the control of a central control unit (CPU) 111. A signal of a predetermined channel is derived by the tuner 101. The received signal derived by the tuner 101 is supplied to a descramble circuit 102. On the basis of encryption key information of a contracted channel stored in an IC card (not shown) which has been inserted into the main body of the IRD 100, the descramble circuit 102 takes out only multiplexed data of the contracted channel (or a channel which is not encrypted) from among the received data, and supplies the multiplexed data to a demultiplexer 103.

The demultiplexer 103 rearranges supplied multiplexed data for each channel, takes out only a channel specified by the user, sends a video stream formed of packets of video portions to an MPEG video decoder 104, and sends an overlap stream formed of packets of audio portions to an MPEG audio decoder 109.

The MPEG video decoder 104 restores video data before being subjected to compression encoding by decoding the video stream, and sends the video data to an NTSC encoder 106 via an adder 105. The NTSC encoder 106 converts video data to a luminance signal and a color difference signal of the NTSC scheme, and sends the luminance signal and the color difference signal to a digital to analog converter 107 as video data of the NTSC scheme. The digital to analog converter 107 converts NTSC data to an analog video signal, and supplies the analog video signal to a connected television receiver (not shown).

The IRD 100 of the present example includes a GUI data generation section 108 for generating various video data for display for graphical user interface (GUI) under the control of the CPU 111. The video data (display data) for GUI generated by the GUI data generation section 108 is supplied to the adder 105, and superimposed on video data outputted from the MPEG video decoder 104. Thus the image for GUI is superimposed on the image of the received broadcast.

An MPEG audio decoder 109 restores PCM audio data before being subjected to compression encoding by decoding the audio stream, and sends the PCM audio data to a digital to analog converter 110.

The digital to analog converter 110 converts PCM audio data to an analog signal to generate an L-Ch audio signal and an R-Ch audio signal. The L-Ch audio signal and the R-Ch audio signal are outputted as a sound via a speaker (not shown) of a connected audio playback system.

Furthermore, the IRD 100 of the present example has such a configuration that the video stream and the audio stream extracted by the demultiplexer 103 can be supplied to an IEEE 1394 interface section 112 and sent to the bus line 1 of the IEEE 1394 scheme connected to the interface section 112. The received video stream and audio stream are sent out in an isochronous transfer mode. When the GUI data generation section 108 is generating video data for GUI, the video data is supplied to the interface section 112 via the CPU 111 and the video data for GUI can be sent out from the interface section 112 to the bus line 1.

A work RAM 113 and a RAM 114 are connected to the CPU 111. Control processing is conducted by using these memories. Furthermore, a manual operation order from a manual operation panel 115 and a remote control signal from an infrared rays receiving section 116 are supplied to the CPU 111, and operation based upon various manual operations can be executed. Furthermore, the CPU 111 can distinguish command and responses transmitted from the bus line 1 to the interface section 112.

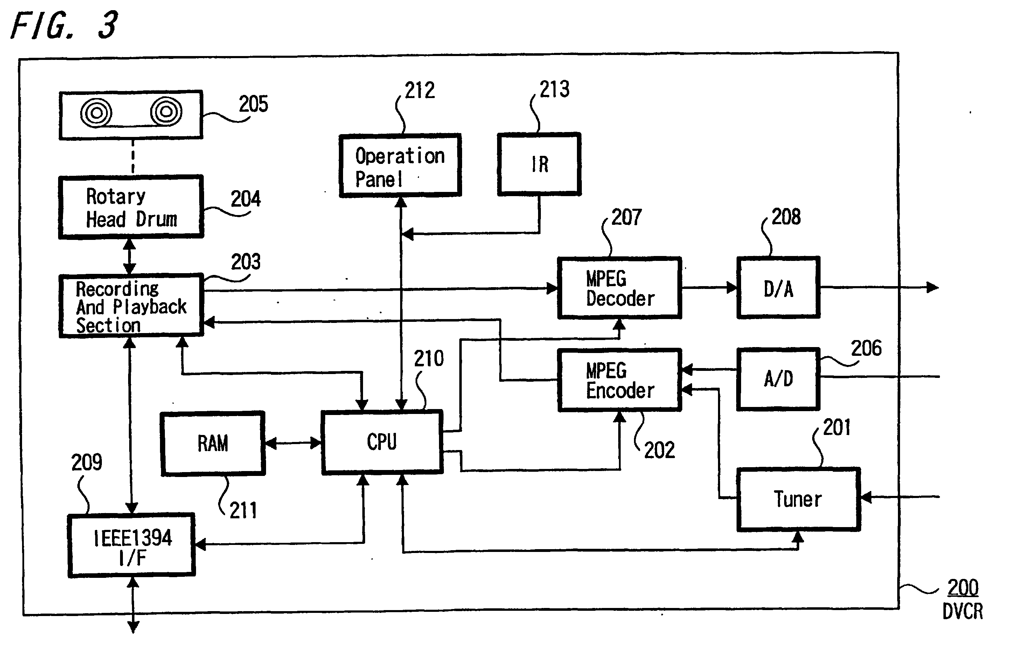

FIG. 3 is a block diagram showing a configuration example of the DVCR 200.

As for the configuration of a recording system, digital broadcast data obtained by receiving a predetermined channel in a tuner 201 incorporated in the DVCR 200 is supplied to an MPEG (Moving Picture Experts Group) encoder 202, and converted to video data and audio data of a scheme suitable for recording, such as the MPEG 2 scheme. If the received broadcast data is data of the MPEG 2 scheme, the processing in the encoder 202 is not conducted.

Data encoded by the MPEG encoder 202 is supplied to a recording and playback section 203, and subjected to processing for recording. The data to be recorded thus processed is supplied to a recording head included in a rotary head drum 204, and recorded on a magnetic tape in a tape cassette 205.

As for an analog video signal and audio signal inputted from the outside, they are converted to digital data by an analog to digital converter 206, converted to video data and audio data of, for example, the MPEG 2 scheme, by the MPEG encoder 202, supplied to the recording and playback section 203, and subjected to processing for recording. The data to be recorded thus processed is supplied to the recording head included in the rotary head drum 204, and recorded on the magnetic tape in the tape cassette 205.

As for the configuration of a playback system, a signal obtained by playing back the magnetic tape in the tape cassette tape 205 by using the rotary head drum 204 is subjected to playback processing in the recording and playback section 203 to produce video data and audio data. The video data and the audio data are supplied to an MPEG decoder 207, and decoded from, for example, the MPEG 2 scheme. The decoded data is supplied to a digital to analog converter 208. An analog video signal and an analog audio signal thus obtained are outputted to the outside.

The DVCR 200 includes an interface section 209 for connection to a bus of the IEEE 1394 scheme. The DVCR 200 is formed in order that video data and audio data supplied from the bus side of the IEEE 1394 scheme to the interface section 209 may be supplied to the recording and playback section 203 and recorded on the magnetic tape in the tape cassette 205. Furthermore, the DVCR 200 is formed in order that video data and audio data reproduced from the magnetic tape in the tape cassette 205 may be supplied from the recording and playback section 203 to the interface section 209 and sent out to the bus side of the IEEE 1394 scheme.

When transmission is conducted via the interface section 209, and the scheme (such as the above described MPEG 2 scheme) for recording data on a medium (magnetic tape) in the DVCR 200 is different from the scheme of the data transmitted on the bus of the IEEE 1394 scheme, scheme conversion may be conducted in a circuit in the DVCR 200.

The recording processing and playback processing conducted in the DVCR 200 and the transmission processing conducted via the interface section 209 are executed under the control of a central control unit (CPU) 210. A memory 211 serving as a work RAM is connected to the CPU 210. Furthermore, manual operation information from a manual operation panel 212 and control information issued by a remote control device and received in the form of light by an infrared rays receiving section 213 are supplied to the CPU 210. Action control corresponding to the manual operation information and control information is conducted. Furthermore, when the interface section 209 has received control data such as an AV/C command described later via the bus of the IEEE 1394 scheme, the data is supplied to the CPU 210 in order that the CPU 210 may effect corresponding operation control.

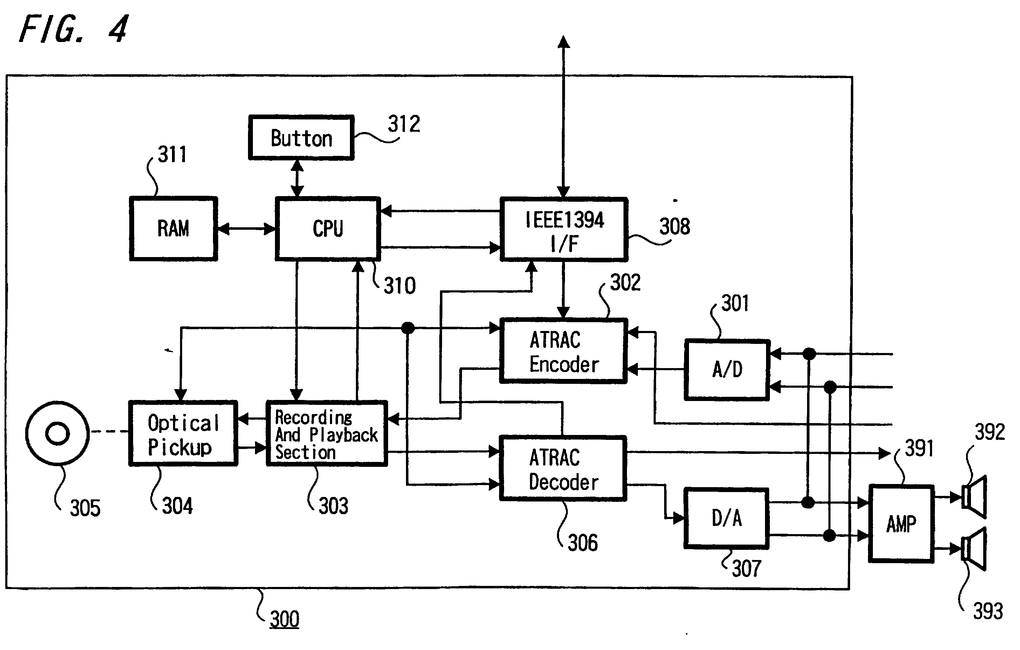

FIG. 4 is a block diagram showing a configuration example of the MD device 300. The MD device 300 serving as an audio recording and playback device is a device for recording and reproducing an audio signal and so on as digital data by using a magneto-optical disc or an optical disc housed in a resin package and called MD (mini disc) as a recording medium.

As for the configuration of a recording system, an analog audio signal of two channels inputted from the outside is converted to digital audio data by an analog to digital converter 301. The digital audio data thus obtained by the conversion is supplied to an ATRAC encoder 302. Audio data compressed in the ATRAC scheme is obtained by encoding. In the case where digital audio data is directly inputted from the outside, the inputted audio data is supplied directly to an ATRAC encoder 302 without being passed via the analog to digital converter 301. Data encoded by the encoder 302 is supplied to a recording and playback section 303 and subjected to processing for recording. On the basis of the data thus processed, an optical pickup 304 is driven and data is recorded on a disc (magneto-optical disc) 305. At the time of recording, magnetic field modulation is conducted by a magnetic head which is not illustrated.

As for the configuration of a playback system, data recorded on a disc (magneto-optical disc or optical disc) 305 is read out by the optical pickup 304, and subjected to playback processing in the recording and playback section 303. Audio data compressed in the ATRAC scheme is thus obtained. The reproduced audio data is supplied to an ATRAC decoder 306 and decoded to digital audio data of a predetermined scheme. The decoded audio data is supplied to a digital to analog converter 307, converted to an analog audio signal of two channels, and outputted. In the case where digital audio data is to be outputted directly to the outside, audio data decoded by the ATRAC decoder 306 is outputted directly without being passed via the digital to analog converter 307. The example of FIG. 4 has such a configuration that the output audio signal subjected to analog conversion is supplied to an amplifier device 391 and subjected to audio output processing such as amplification and an audio output of two channels is emitted from connected speakers 392 and 393.

The MD device 300 includes an interface section 308 for connection to the bus of the IEEE 1394 scheme. The MD device 300 is formed in order that audio data supplied from the bus side of the IEEE 1394 scheme to the interface section 308 may be supplied to the recording and playback section 302 via the ATRAC encoder 302 and recorded on the disc 305. Furthermore, the MD device 300 is formed in order that audio data reproduced from the disc 305 may be supplied from the recording and playback section 302 to the interface section 308 via the ATRAC decoder 306 and sent out to the bus side of the IEEE 1394 scheme.

The recording processing and playback processing conducted in the MD device 300 and the transmission processing conducted via the interface section 308 are executed under the control of a central control unit (CPU) 310. A memory 311 serving as a work RAM is connected to the CPU 310. Furthermore, manual operation information from a manual operation panel 312 is supplied to the CPU 310. Action control corresponding to the manual operation information is conducted. Furthermore, when the interface section 308 received control data such as an AV/C command described later via the bus of the IEEE 1394 scheme, the data is supplied to the CPU 310 in order that the CPU 310 may effect corresponding operation control.

A data transmission state on the bus 1 of the IEEE 1394 scheme connecting the devices 100, 200 and 300 to each other will now be described.

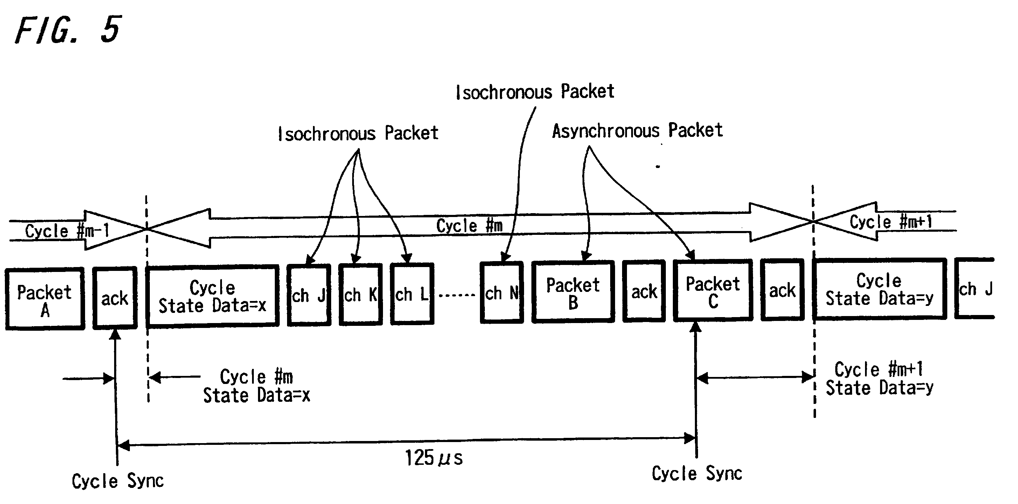

FIG. 5 is a diagram showing a cycle structure of data transmission of devices connected by the IEEE 1394. According to the IEEE 1394, data is divided into packets and the packets are transmitted in a time division manner by taking a cycle having a length of 125 µs as a reference. This cycle is produced by a cycle start signal supplied from a node having a cycle master function (some device connected to the bus). Isochronous packets secure a band (which is called band although it is a time unit) required for transmission from the head of every cycle. In isochronous transmission, therefore, transmission of data in a fixed time is ensured. However, acknowledgment from the receiving side is not conducted. If a transmission error occurs, there is no mechanism for protection and data is lost. During time of each cycle which is not used for isochronous transmission, a node which has secured the bus as a result of arbitration sends out asynchronous packets. In this asynchronous transmission, reliable transmission is ensured by using acknowledgment and retry. However, the transmission timing does not become fixed.

In order that a predetermined node may conduct isochronous transmission, the node must correspond to the jsochronous function. In addition, at least one of nodes corresponding to the isochronous function must have a cycle master function. In addition, at least one of nodes connected to the IEEE 1394 serial bus must have an isochronous resource manager function.

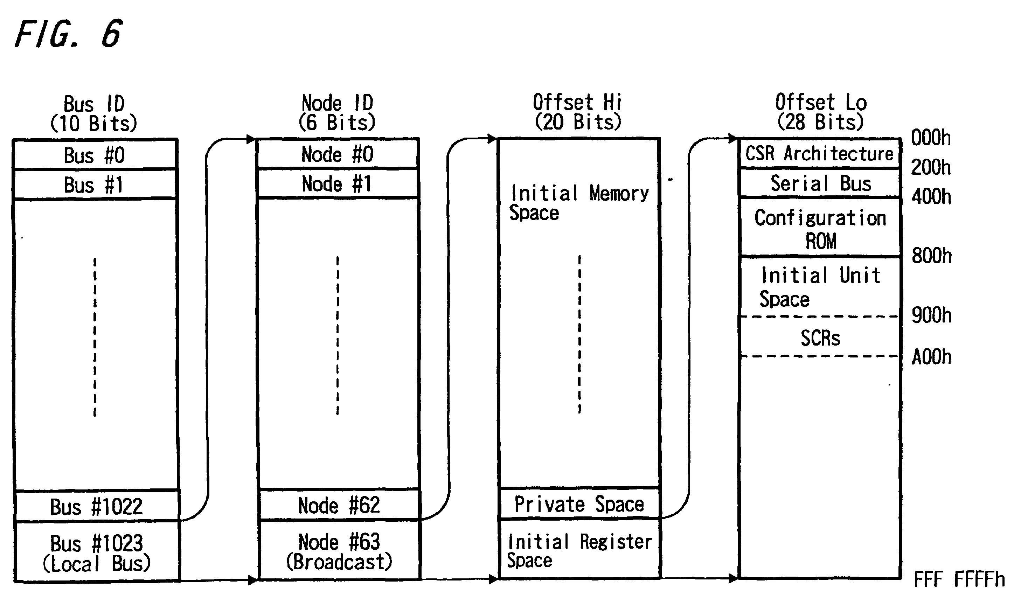

The IEEE 1394 conforms to a CSR (Control & Status Register) architecture having an address space of 64 bits prescribed by ISO/IEC 13213. FIG. 6 is a diagram showing the structure of the address space of the CSR architecture. Sixteen high-order bits are used for a node ID indicating each node on the IEEE 1394. Forty-eight remaining bits are used to specify an address space given to each node. The sixteen high-order bits are further divided into ten bits of a bus ID and six bits of a physical ID (a node ID of a narrow sense). A value having 1 in every bit is used for special purpose. Therefore, 1023 buses and 63 nodes can be specified. Upon bus reset, the node IDs are provided again. The bus reset occurs when the configuration of the devices connected to the bus 1 has changed. For example, when it is recognized that any of the devices connected to the bus 1 is removed or a device is newly connected to the bus 1, bus reset is executed.

In an address space of 256 tera bytes prescribed by forty-eight low-order bits, a space prescribed by twenty high-order bits is divided into an initial register space of 2,048 bytes to be used for registers specific to CSR and registers specific to the IEEE 1394, a private space, and an initial memory space. In the case where the space prescribed by twenty high-order bits is the initial register space, it is used as configuration ROMs (read only memories), an initial unit space to be used for application specific to the node, and plug control registers (PCRs).

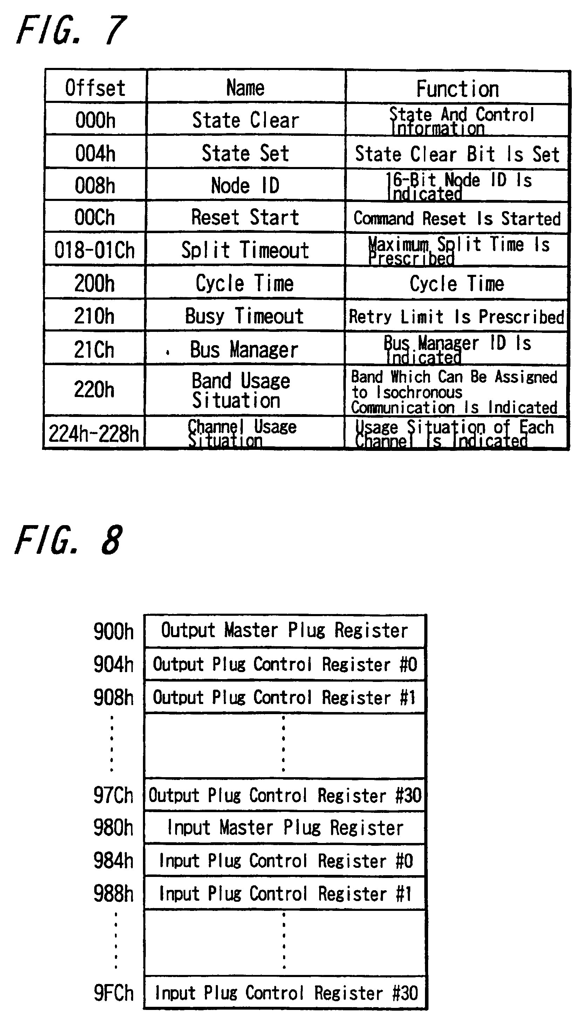

FIG. 7 is a diagram showing offset addresses, names, and functions of principal CSRs. Offset of FIG. 7 denotes an offset address compared with an address FFFFF0000000h where the initial register space begins. (Numerals having h at their end are expressed by hexadecimal notation.) A bandwidth available register having an offset 220h indicates a band which can be assigned to isochronous communication, and only the value of the node operating as the isochronous resource manager is made valid. That is, each node has CSRs shown in FIG. 6. As for the bandwidth available register, however, only that of the isochronous resource manager is made valid. In other words, substantially only the isochronous resource manager has the bandwidth available register. The bandwidth available register holds a maximum value when no bands are assigned to isochronous communication. Every time a band is assigned, the value is decreased.

In channel available registers of offsets 224h to 228h, respective bits correspond to channel numbers 0 to 63, respectively. If a bit is 0, it is indicated that the channel has already been assigned. Only the channel available register of the node serving as the isochronous resource manager is valid.

Referring back to FIG. 6, a configuration ROM based upon a general ROM (read only memory) format is arranged in addresses 200h to 400h in the initial register space. In the configuration ROM, a bus info-block, a route directory, and a unit directory are arranged. In a company ID in the bus info-block, an ID number indicating a manufacturer of the device is stored. In a chip ID, there is stored an ID which is unique to the device and the one and only in the world and which does not have duplication with other devices.

In order to control the input and output of a device via an interface, each node has a PCR (plug control register) prescribed in IEC 1883, in addresses 900h to 9FFh in the initial unit space of FIG. 6. This has been obtained by substantializing the concept of a plug in order to logically form a signal path similar to an analog interface. FIG. 8 is a diagram showing a configuration of the PCR. The PCR has an oPCR (output Plug Control Register) representing an output plug and an iPCR (input Plug Control Register) representing an input plug. Furthermore, each PCR has a register oMPR (output Master Plug Register) and a register iMPR (input Master Plug Register) respectively indicating information of an output plug or an input plug specific to the device. Each device does not have a plurality of oMPRs and iMPRs. However, each device is able to have a plurality of oPCRs and iPCRs corresponding to individual plugs, according to the capability thereof. Each of PCRs shown in FIG. 8 has 31 oPCRs and 31 iPCRs. The flow of isochronous data is controlled by operating registers corresponding to these plugs.

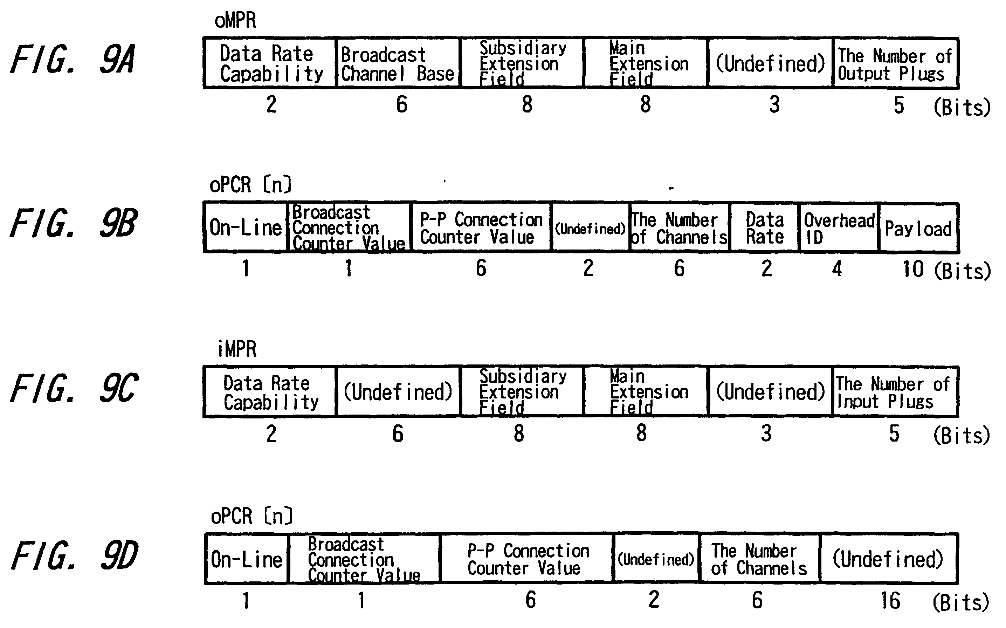

FIG. 9 is a diagram showing configurations of the oMPR, oPCR, iMPR and iPCR. FIG. 9A shows a configuration of the oMPR. FIG. 9B shows a configuration of the oPCR. FIG. 9C shows a configuration of the iMPR. FIG. 9D shows a configuration of the iPCR. In a 2-bit "data rate capability" of the MSB side of each of the oMPR and iMPR, there is stored a code indicating a maximum transmission rate of isochronous data which can be transmitted or received by the device. A broadcast channel base. of the oMPR prescribes the number of a channel to be used for broadcast output.

In a 5-bit "number of output plugs" of the LSB side of the oMPR, there is stored the number of output plugs the device has, i.e., a value indicating the number of oPCRS. In a 5-bit "number of input plugs" of the LSB side of each iMPR, there is stored the number of input plugs the device has, i.e., a value indicating the number of iPCRs. A main extended field and a subsidiary extended field are areas defined for future extension.

An "on-line" of an MSB of each of the oPCRs and iPCRs indicates the usage state of the plug. In other words, the on-line value having "1" indicates that the plug is on-line and the on-line value having "0" indicates that the plug is off-line. A value of a "broadcast connection counter" of each of oPCRs and iPCRs indicates whether there is broadcast connection (1) or not (0). A value of a "point-to-point connection counter" having a 6-bit width in each of oPCRs and iPCRs represents the number of point-to-point connections the plug has. The point-to-point connection (so-called p-p connection) is a connection for conducting transmission only between one specific node and another specific node.

A value of a "channel number" having a 6-bit width in each of oPCRs and iPCRs represents the number of isochronous channel to which the plug is connected. A value of a "data rate" having a 2-bit width in each of oPCRs indicates the actual transmission rate of a packet of isochronous data outputted from that plug. A code stored in an "overhead ID" having a 4-bit width in each of oPCRs indicates the bandwidth of the overhead of the isochronous communication. A value of a "payload" having a 10-bit width in each of oPCRs indicates a maximum value of data contained in an isochronous packet the plug can handle.

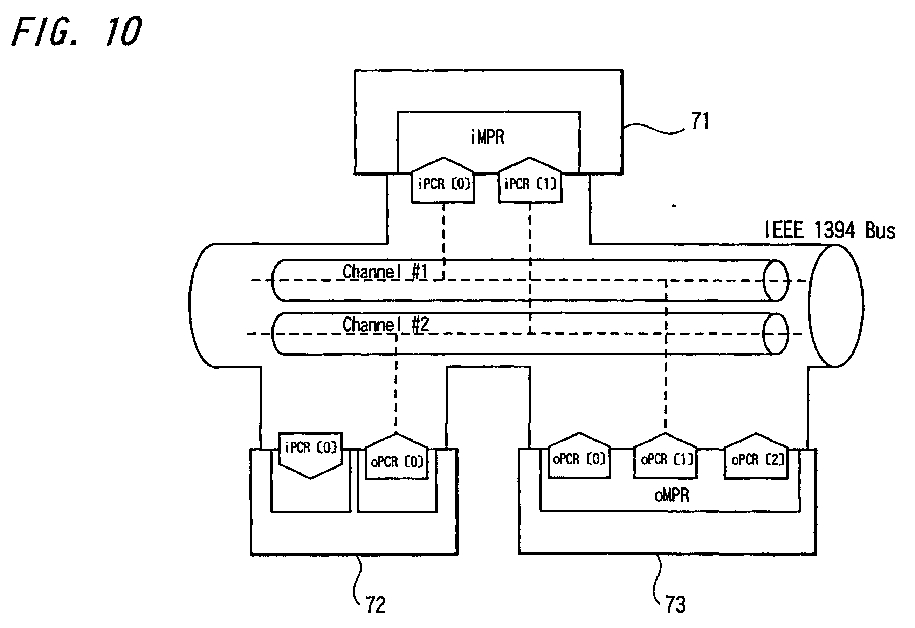

FIG. 10 is a diagram showing relations among plugs, plug control registers, and isochronous channels. In FIG. 10, devices connected to a bus of the IEEE 1394 scheme are shown as AV devices 71 to 73. Isochronous data specified in channel by an oPCR [1] among oPCR [0] to oPCR [2] prescribed in transmission rate and the number of oPCRs by an oMPR of the AV device 73 is sent out to a channel #1 of an IEEE 1394 serial bus. Between iPCR [0] and iPCR [1] prescribed in transmission rate and the number of iPCRs by an iMPR of the AV device 71, the transmission rate and the iPCR [0] specify the input channel #1. The AV device 71 reads isochronous data sent out on the channel #1 of the IEEE 1394 serial bus. In the same way, the AV device 72 sends out isochronous data onto the channel #2 specified by the oPCR [0]. The AV device 71 reads isochronous data from the channel #2 specified by the iPCR [1].

In this way, data transmission is conducted between devices connected by the IEEE 1394 serial bus. In the system of the present example, however, control and state decision of respective devices can be conducted by utilizing an AV/C command set prescribed as commands for controlling devices connected via the IEEE 1394 serial bus. The AV/C command set will now be described.

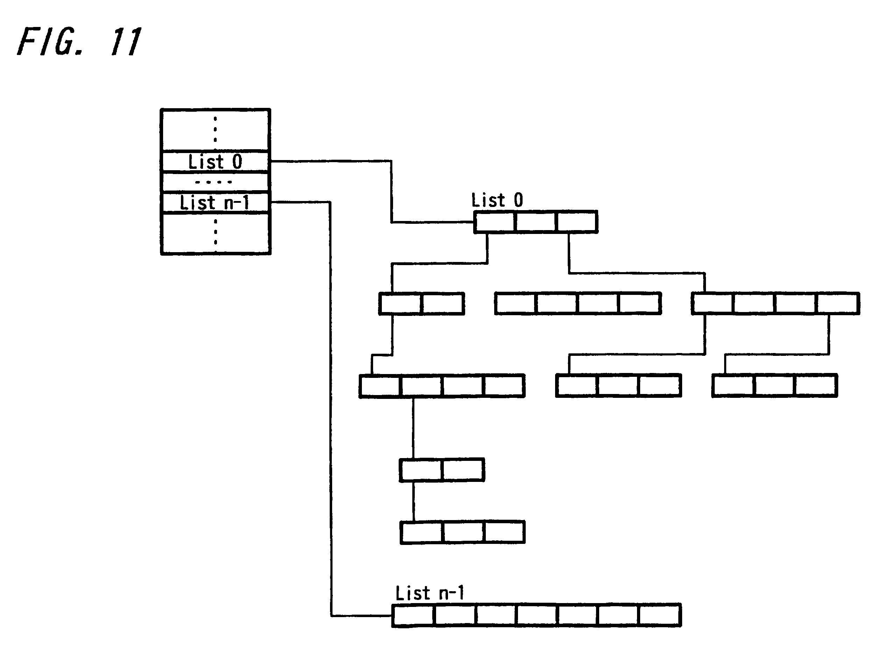

First of all, a data structure of a subunit identifier descriptor in the AV/C command set used in the system of the present example will now be described by referring to FIGS. 1 to 14. FIG. 11 shows the data structure of the subunit identifier descriptor. As shown in FIG. 11, the subunit identifier descriptor is formed of lists each having a hierarchical structure. In the case of a tuner, the lists represent channels. In the case of a disc, the lists represent songs recorded thereon. A list of the highest layer of a hierarchical structure is called root list. For example, a list 0 becomes a root for its subordinate lists. In the same way, other lists become root lists. There are as many root lists as objects. For example, in the case where AV devices connected to the bus are tuners, objects are channels in digital broadcast. Furthermore, all lists of one hierarchical class share common information.

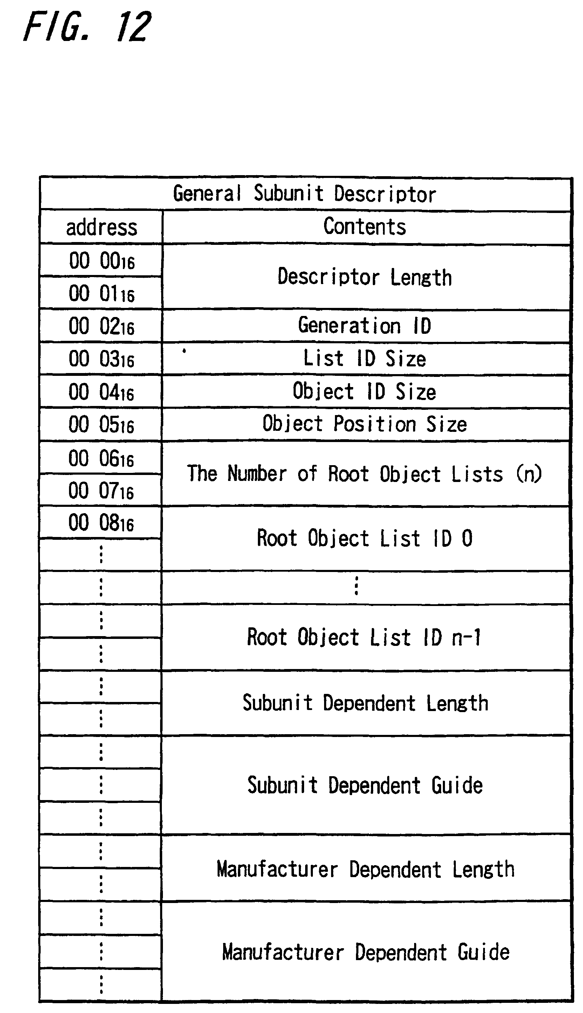

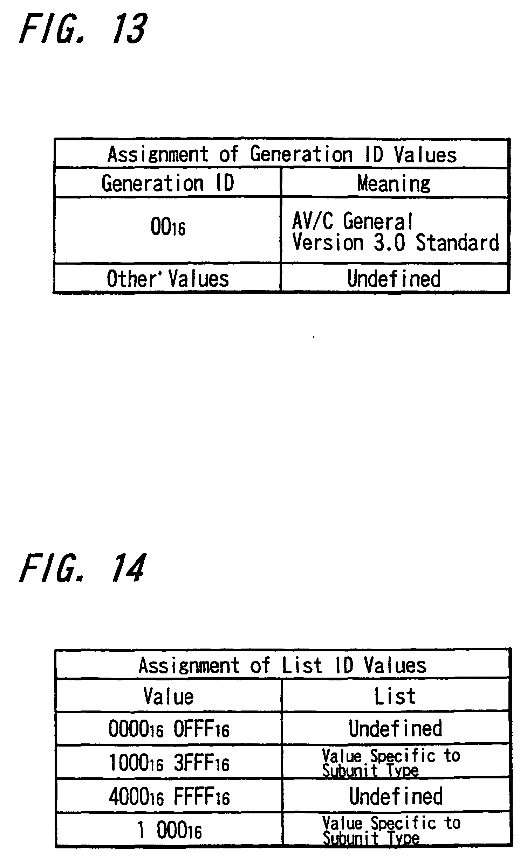

FIG. 12 shows a format of a general subunit identifier descriptor. In the general subunit identifier descriptor, attribute information concerning the function is described as its contents. A "descriptor length field" does not contain the value of its field itself. A "generation ID" indicates the version of the AV/C command set. Its value is, for example, "00h" (where h represents hexadecimal notation). As shown in FIG. 13, for example, "00h" means that the data structure and command conform to version 3.0 of the AV/C General Specification. Furthermore, as shown in FIG. 13, all values except "00h" are reserved and secured for future specifications.

A "size of list ID" indicates the number of bytes of a list ID. A "size of object ID" indicates the number of bytes of an object ID. A "size of object position" indicates the position (the number of bytes) in a list to be used for reference at the time of control. A "number of root object list" indicates the number of root object lists. A "root object list ID" indicates an ID for identifying a root object list of the highest rank of each of independent hierarchical classes.

A "subunit dependent length" indicates the number of bytes of a subsequent "subunit dependent information" field. The "subunit dependent information" field is a field indicating information peculiar to the function. A "manufacturer dependent length" indicates the number of bytes of a subsequent " manufacturer dependent information" field. The "manufacturer dependent information" field is a field indicating specification information of a vendor (manufacturer). If the descriptor does not contain "manufacturer dependent information", the " manufacturer dependent information" field is not present.

FIG. 14 indicates the assignment range of list IDs shown in FIG. 12. As shown in FIG. 14, "0000h to 0FFFh" and "4000h to FFFFh" are reserved and secured as assignment ranges for future specifications. In order to identify dependent information of the function type, "1000h to 3FFFh" and "10000h to maximum value of list ID" are prepared.

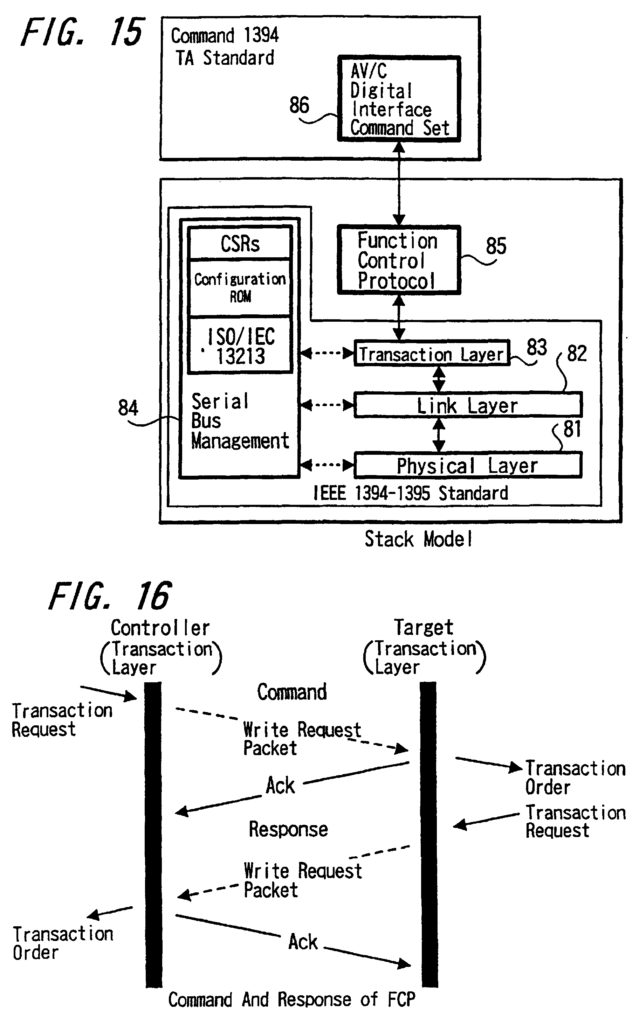

By referring to FIGS. 15 to 20, the AV/C command set used in the system of the present example will now be described. FIG. 15 shows a stack model of the AV/C command set. As shown in FIG. 15, a physical layer 81, a link layer 82, a transaction layer 83, and a serial bus management 84 conform to the IEEE 1394. A FCP (Function Control Protocol) 85 conforms to IEC 61883. An AV/C command set 86 conforms to 1394 TA specifications.

FIG. 16 is a diagram showing a command and a response of the FCP 85 shown in FIG. 15. The FCP is a protocol for effecting control of devices (nodes) on the bus of the IEEE 1394 scheme. As shown in FIG. 16, the controlling side is a controller and the controlled side is a target. Command and response transmission of the FCP are conducted between nodes by using write transaction of asynchronous communication of the IEEE 1394. Upon receiving data, the target returns an acknowledge to the controller for acknowledging the reception.

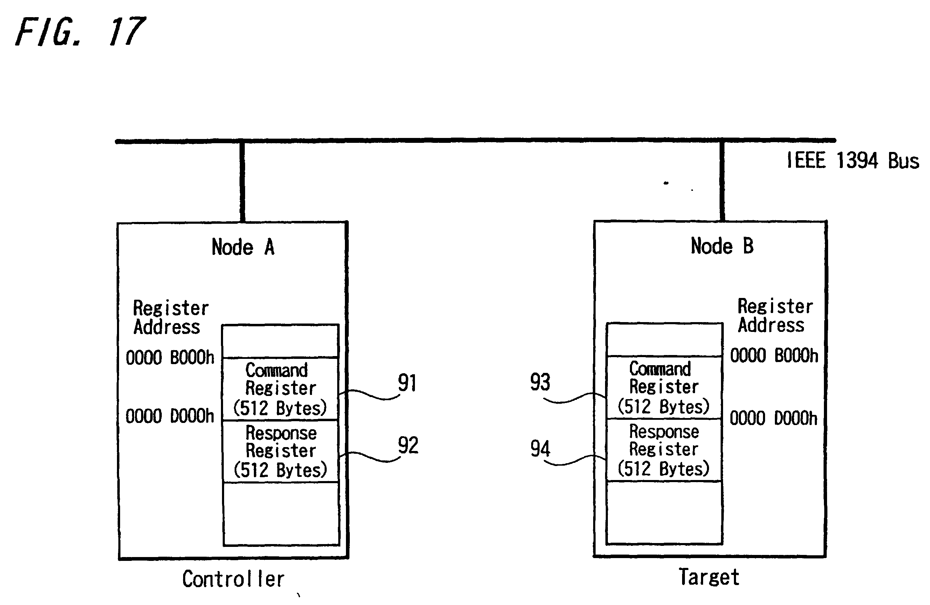

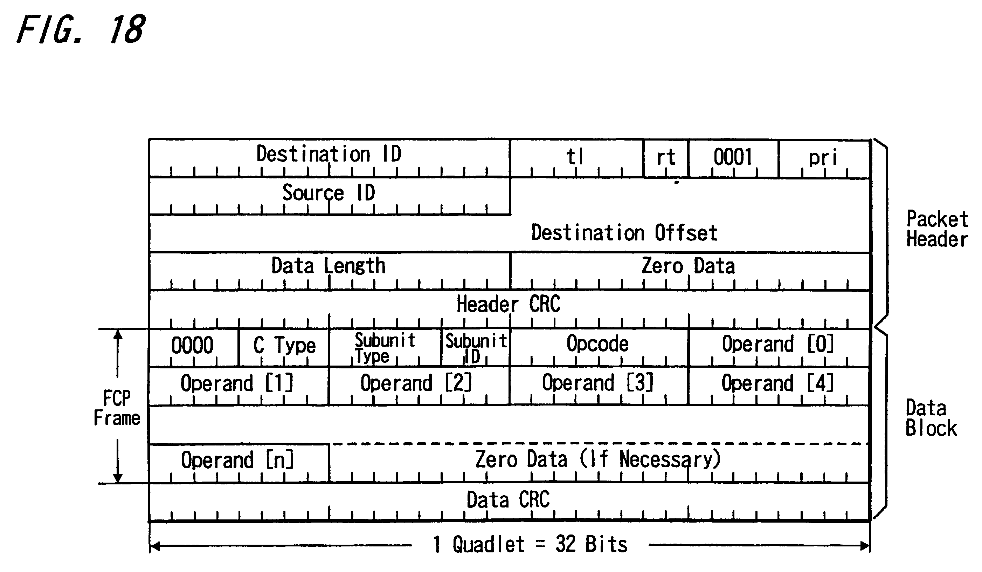

FIG. 17 is a diagram showing the relation between the command and response of the FCP of FIG. 16 in more detail. A node A and a node B are connected via an IEEE 1394 bus. The node A is the controller, and the node B is the target. In both the node A and the node B, a command register and a response register each having 512 bytes are prepared. As shown in FIG. 17, the controller conveys an instruction by writing a command message into a command register 93 of the target. On the other hand, the target conveys a response by writing a response message into a response register 92 of the controller. For the two messages, control information is exchanged. The kind of a command set sent by the FCP is described in CTS included in a data field shown in FIG. 18 and described later.

FIG. 18 shows a data structure of a packet transmitted in an asynchronous transfer mode of the AV/C command. The AV/C command set is a command set for controlling an AV device, and its CTS (ID of command set) = "0000". AV/C command frames and response frames are exchanged between the nodes by using the above described FCP. In order to prevent casting a burden upon the bus and the AV device, a response to a command is defined to be sent within 100 ms. As shown in FIG. 18, data of an asynchronous packet has 32 bits (= 1 quadlet) in the horizontal direction. Upper columns of FIG. 18 show a header portion of the packet, and lower columns of FIG. 18 show a data block. A destination ID indicates the destination.

The CTS indicates an ID of the command set. In the ÀV/C command set, CTS = "0000". A C type/response field indicates a function class of a command when the packet is a command, and a processing result of a command when the packet is a response. Commands are broadly divided into four kinds: (1) commands (CONTROL) for controlling the function from the outside; (2) commands (STATUS) for inquiring about the state from the outside; (3) commands for inquiring whether support of a control command is present, from the outside (GENERAL INQUIRY (whether support of an opcode is present) and SPECIFIC INQUIRY (whether support of an opcode and operands are present)); and (4) commands (NOTIFY) for requesting the notice of a state change to the outside.

A response is returned according to the command kind. As responses to the CONTROL commands, there are "NOT IMPLEMENTED", "ACCEPTED", "REJECTED" and "INTERIM". AS responses to the STATUS commands, there are "NOT IMPLEMENTED", "REJECTED", "IN TRANSACTION", and "STABLE". As responses to the commands for inquiring whether support of a command is present, from the outside (GENERAL INQUIRY and SPECIFIC INQUIRY), there are "IMPLEMENTED" and "NOT IMPLEMENTED". As responses to the commands for requesting the notice of a state change to the outside, there are "NOT IMPLEMENTED", "REJECTED", "INTERIM", and "CHANGED".

A "subunit type" is provided to specify a function in the device. For example, "tape recorder/player", "tuner", or the like is assigned. Besides the function corresponding to the device, BBS (bulletin board subunit) which is a subunit opening information to other devices is also assigned to the "subunit type". In order to distinguish in the case where there are a plurality of subunits of the same kind, addressing is conducted by using a subunit ID as a distinguishing number. An "opcode" which is a code of operation represents a command. An "operand" represents a parameter of the command. Additional operands which are added as occasion demands are also prepared. After the operands, "0" data or the like are added. A Data CRC (Cyclic Redundancy Check) is used for error check at the time of data transmission.

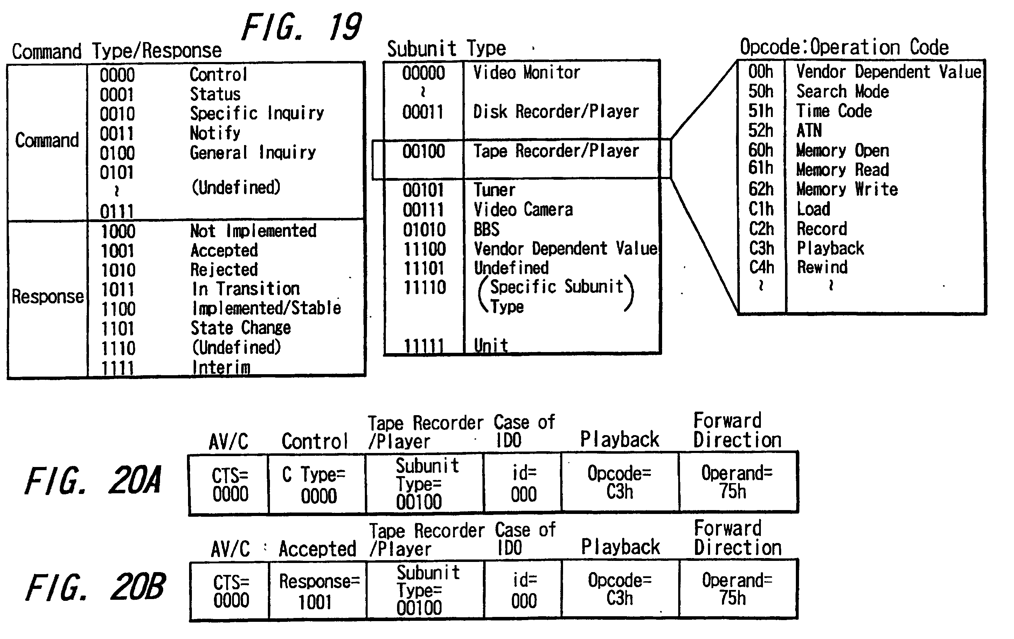

FIG. 19 shows a concrete example of the AV/C command. The left side of FIG. 19 shows concrete examples of c type/response. Its upper column shows commands and its lower column shows responses. "CONTROL" is assigned to "0000". "STATUS" is assigned to "0001". "SPECIFIC INQUIRY" is assigned to "0010". "NOTIFY" is assigned to "0011". "GENERAL INQUIRY" is assigned to "0100". "0101 to 0111" are reserved and secured for future specifications. "NOT IMPLEMENTED" is assigned to "1000". "ACCEPTED" is assigned to "1001". "REJECTED" is assigned to "1010" "IN TRANSITION" is assigned to "1011" "IMPLEMENTED/STABLE" is assigned to "1100". "CHANGED" is assigned to "1101". "INTERIM" is assigned to "1111". "1110" is reserved and secured for future specifications.

The center of FIG. 19 shows concrete examples of the subunit type. "Video monitor" is assigned to "00000". "Disc recorder/player" is assigned to "00011". "Tape recorder/player" is assigned to "00100". "Tuner" is assigned to "00101". "Video camera" is assigned to "00111". A subunit called BBS (Bulletin Board Subunit) and used as a bulletin board is assigned to "01010". A manufacturer dependent subunit type (Vender unique) is assigned to "11100". A specific subunit type (Subunit type extended to next byte) is assigned to "11110". "Unit" is assigned to "11111", and it is used when the command or response is sent to the device itself. For example, turning on and off of the power supply can be mentioned.

The right side of FIG. 19 shows concrete examples of opcodes (operation codes). For each of the subunit types, a table of opcodes exists. In FIG. 19, opcodes in the case where the subunit type is the "tape recorder/player" are shown. Furthermore, for each opcode, an operand is defined. Here, a manufacturer dependent value (Vender dependent) is assigned to "00h". "Search mode" is assigned to "50h". "Time code" is assigned to "51h". "ATN" is assigned to "52h". "Open memory" is assigned to "60h". "Memory reading" is assigned to "61h". "Memory writing" is assigned to "62h". "Loading" is assigned to "C1h". "Audio recording" is assigned to "C2h". "Reproducing" is assigned to "C3h". "Rewinding" is assigned to "C4h".

FIG. 20 shows concrete examples of an AV/C command and an AV/C response. For example, in the case where a playback order is to be given to a playback device serving as the target (consumer), the controller sends the command as shown in FIG. 20A to the target. In this command, CTS = "0000" because the AV/C command set is used. Since the command (CONTROL) for controlling a device from the outside is used, the c type becomes c type = "0000" (see FIG. 19). Since the subunit type is a tape recorder/player, it follows that subunit type = "00100" (see FIG. 19). Furthermore, "id" indicates the case of ID0, and id = 000. The opcode becomes "C3h" meaning the playback (see FIG. 19). The operand becomes "75h" meaning the forward direction (FORWARD). Upon playback, the target returns a response as shown in FIG. 20B to the controller. Since "accepted" is included in the response, it follows that response = "1001" (see FIG. 19). Except the response, other fields are the same as those of FIG. 20A, and description thereof will be omitted.

It is now assumed that data transmission based upon the AV/C command is conducted in the system of the present example heretofore described. Processing of recognizing a device connected to the bus 1 will now be described.

First, in the network system formed by connecting devices with the bus 1 of the IEEE 1394 scheme, each device has an individual node unique ID as already described. Apart from the node unique ID, a node ID is set within the network. Upon bus reset, the node ID is set individually for the device of each node unique ID.

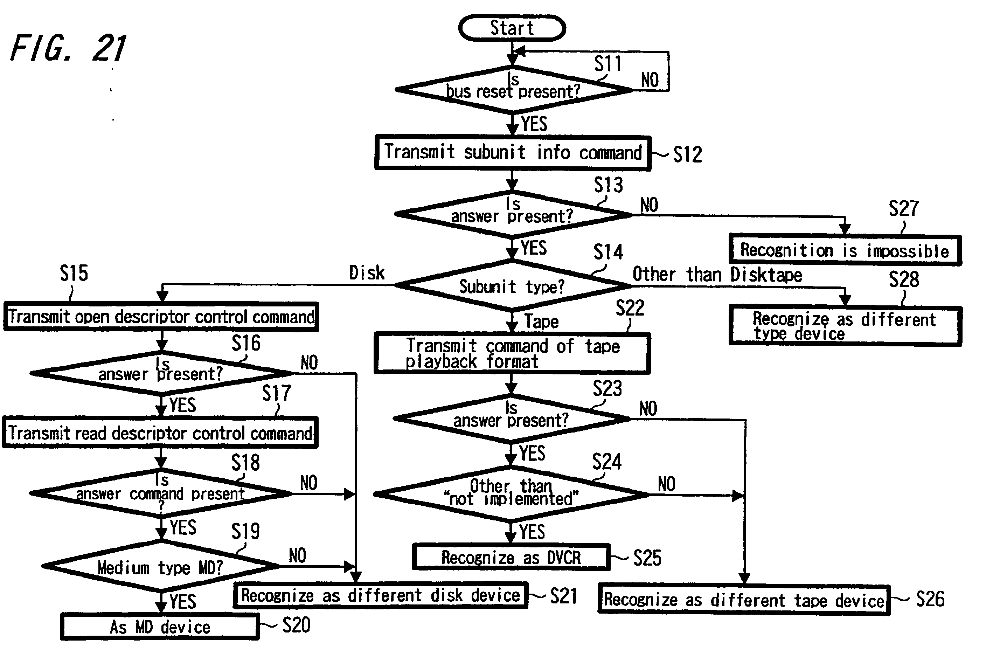

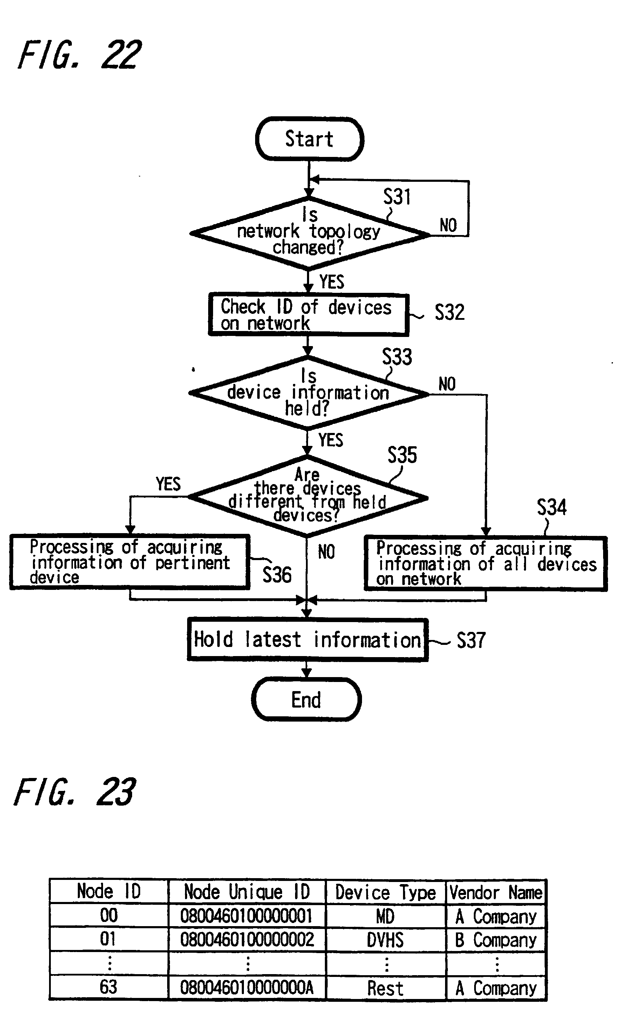

If there is bus reset, in the case of the present example, the controller 13 in the IRD 100 conducts processing of discriminating the kinds of other devices connected to the bus 1 (the DVCR 200 and the MD device 300) by using a command and a descriptor prescribed in the AV/C command. Hereafter, the processing of discriminating the kind of the connected device will be described by referring to flow charts of FIGS. 21 and 22 and data configurations of FIG. 23 and subsequent drawing.

First, as shown in the flow chart of FIG. 21, the controller 13 in the IRD 100 determines whether bus reset processing of resetting the node unique ID and so on of the bus 1 has been conducted (step S11). Upon judging the bus reset to have been conducted, the controller 13 transmits a SUBUNIT INFO command prescribed in AV/C successively to devices connected to the bus 1 (step S12). Details of the SUBUNIT INFO command will be described later. The SUBUNIT INFO command is a command that devices corresponding to AV/C need to have. When there is a correct answer to this Command, the device of the opposite party is known to be a device corresponding to the AV/C.

After the controller 13 in the IRD 100 has transmitted the SUBUNIT INFO command, the controller 13 determines whether answer data prescribed in AV/C has been returned to the IRD 100 (step S13). If answer data is not transmitted, the controller 13 judges discrimination of the pertinent device using the AV/C command to be impossible (step S27).

When answer data is transmitted at step S13, the controller 13 judges the subunit type indicated by the answer data (step S14). Details of the subunit type which can be discriminated will be described later. In the AV/C, however, it is possible to discriminate at least a unit (device) of such a type that a disc is handled as the medium, a unit (device) of such a type that tape (magnetic tape) is handled as the medium, and a unit (device) of another type.

If in decision of step S14 in the controller 13 it is judged that the subunit that the unit of the opposite party of communication has is a subunit of such a type that a disc is handled as the medium, then the controller 13 conducts processing of reading out a descriptor that the opposite party has. In order to read out the descriptor, the controller 13 first transmits a command of OPEN descriptor control which is a command for opening the descriptor of the pertinent unit (step S15).

The controller 13 then determines whether there is a return from the pertinent device, for the transmission of the command (step S16). If there is a return, the controller 13 transmits a command of READ descriptor control which is a command for reading out the opened descriptor (step S17).

Furthermore, the controller 13 determines whether there is a return from the pertinent device, for the transmission of the command (step S18). If there is a return, the controller 13 judges contents of data of the medium type included in data of the returned descriptor, and determines whether the code has a medium type of MD (mini disc) (step S19). Upon judging the code to be an MD code, the controller 13 of the IRD 100 recognizes the pertinent device as an MD device (step S20). If there is no return command at the step S16 or S18, or if the medium type is judged not to be MD at the step S19, the controller 13 recognizes the pertinent device as a disc device handling a disc of another format (step S21).

If the subunit the unit of the opposite party of the communication has is judged at the step S14 in the controller 13 to be one of the type handling tape as its medium, then the controller 13 conducts processing of inquiring about the format used by the opposite party to play back the tape. In other words, the controller 13 transmits a status command of a TAPE PLAYBACK FORMAT for inquiring about the tape playback format on the bus 1 (step S22).

And the controller 13 determines whether there is a return from the pertinent device for the transmission of the command (step S23). If there is a return, the controller 13 determines whether the inquiry about the tape playback format is valid. To be concrete, the controller 13 determines whether the return is a response other than the response "NOT IMPLEMENTED" which is a response being not able to respond to the transmission of a status command conducted at the step S22 (step S24).

When the controller 13 has judged the response to be a command other than "NOT IMPLEMENTED", the controller 13 recognizes the pertinent unit as a DVCR of the D-VHS standards (step S25). If there is no answer command at the step S23, or if the response is judged to be a command of "NOT IMPLEMENTED" at the step 24, the controller 13 recognizes the device as a tape device which handles tape of a different format (step S26).

Furthermore, if in the decision of the subunit type at the step S14 the subunit type is judged to be other than a disc and tape, the controller 13 recognizes the device as a device of a different type (step S28).

The IRD 100 executes the processing heretofore described successively for respective devices connected to the bus 1, discriminates the kinds and so on of all devices connected to the bus 1, and stores and holds the data thus discriminated in a storage section prepared in the controller 13. After the IRD has thus discriminated the kinds and so on of respective devices, the IRD 10 collects data concerning respective devices.

By referring to a flow chart of FIG. 22, processing of collecting data concerning respective discriminated devices executed in the controller 13 of the IRD 100 will now be described.

First, it is determined whether there is a change in the network topology (step S31). Here, the network topology is judged to have changed when the bus resetting is conducted and thereafter the processing of discriminating the kinds of respective devices is conducted (i.e., the processing of the flow chart of FIG. 21 is executed). If the network is judged to have changed, then the controller 13 sends a command for inquiring predetermined data peculiar to all devices connected to the bus 1 included in the network, which are node unique IDs here, of respective devices. The controller 13 of the IRD 100 judges responses for the command, and judges the node unique IDs of respective devices (step S32). By the way, if the node unique IDs of respective devices in the network have already been acquired by, for example, the processing of the flow chart of FIG. 21, the controller 13 reads out the acquired and stored node unique IDs and judges them.

Here, the controller 13 determines whether data concerning devices in the network configuration preceding the detection of the network topology change conducted at the step S31 are held in the storage section prepared in the controller 13 (step S33). If in this decision the previous device data are judged not to have been held, then the controller 13 sends a command successively to all devices on the network to make them transmit data concerning the devices, and conducts processing for storing data returned in response to the command in the storage section prepared in the controller 13 (step S34). The processing conducted at the step S34 is ordinary device information acquisition processing conventionally conducted.

If in the decision of the step S33 the previous device data are judged to have been held, the controller 13 determines whether there is a device having an ID which is included in the node unique IDs of respective devices judged at the step S32 and which is different from the node unique ID of the device stored in the storage section (step S35). If in this decision a device having a node unique ID different from the stored ID is judged to be present, the controller 13 sends a command to the device having the pertinent node unique ID to make the device send data concerning the device, and conducts processing for storing data returned in response to the command in the storage section prepared in the controller 13 (step S36).

Upon conducting the processing heretofore described, the controller 13 causes only data concerning the devices currently connected to the network to be held and other data to be deleted, and thus causes the latest network data to be held (step S37). In other words, if the information acquisition processing is conducted at the step S34, the controller 13 causes all acquired data to be held as the network data. If a device different from any of the devices data of which are held is judged at the step S35 not to be present, the controller 13 causes the previously stored data to be held as they are as the network data. (If a device previously connected disappears, however, the controller 13 causes the data concerning the device to be deleted.) If the presence of a differing device is detected at the step S35 and if data of some devices are acquired at the step S36, then the controller 13 causes network data updated with the acquired data to be held.

By the way, the node unique IDs used as data peculiar to respective devices in the processing heretofore described are identification data respectively provided to the devices connected to the bus 1 of the IEEE 1394 scheme, one by one. For example, as shown in FIG. 23, the node unique ID of each device is formed of a predetermined number of bits. From data of a predetermined number of bits in the data, the device type of the device (representing which type the device belongs to) and the vendor name such as the manufacturing company name of the device can be known. In addition, data corresponding to a serial code such as a manufacturing number of each device is also inserted. Even if devices have the same form and are manufactured by the same company, their node unique IDs become data of different values. A node unique ID as shown in FIG. 23 is stored in the storage section in the controller 13 of the IRD 100 so as to be associated with, for example, each node ID. (Since the node ID is re-provided at the time of, for example, bus resetting, it is not necessarily constant at all times.)

In this way, processing of collecting data from respective devices connected to the network is conducted. In the case where at least device data before bus resetting remain and only some devices differ between the network before bus resetting and the current network, therefore, it is necessary to collect only data concerning the differing devices. The processing quantity for collecting the device data on the network is thus reduced. The burden of data collection can be reduced. In addition, the time required for collection of the device data can be shortened.

For example, it is assumed in the case of the network configuration shown in FIG. 1 and already described that the MD device 400 is newly connected to the bus 1 and bus resetting is applied. Only data concerning the MD device 400 does not exist in the storage section of the controller 13 of the IRD 100. Data of other devices 200 and 300 are already stored therein. Therefore, it is necessary to only request the controller 41 of the MD device 400 to transmit data concerning the device 400. As compared with the case where all devices are requested to transmit data, the processing quantity and the processing time required for updating the network data can be substantially reduced.

Furthermore, in the case where some devices are removed from the bus 1 and thereby bus resetting is applied, it is necessary to only delete data concerning the removed devices. In the same way, therefore, new network data are obtained by simple processing.

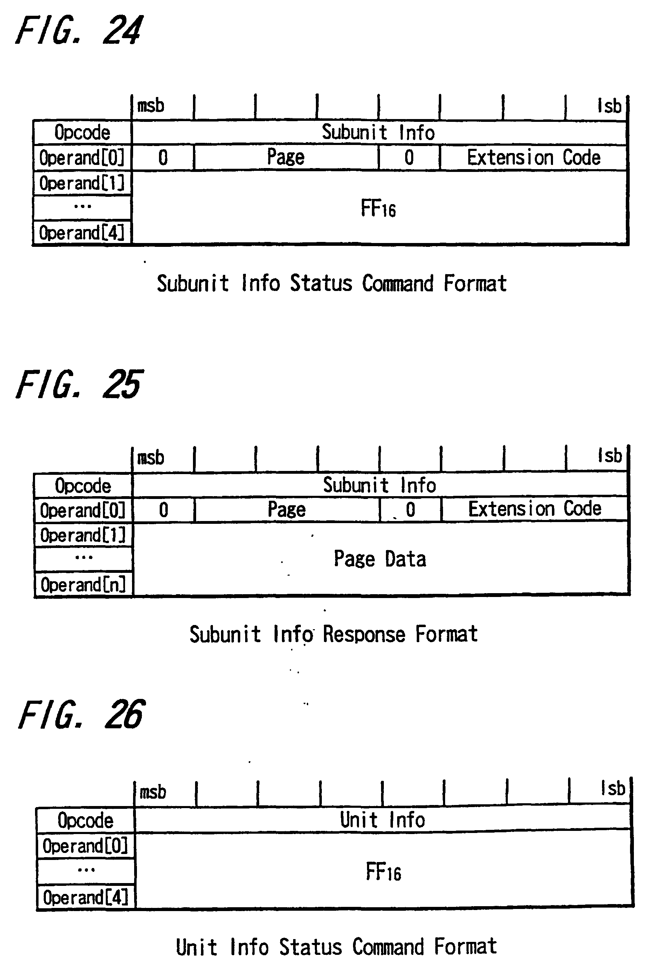

The subunit info status command in the AV/C command is defined by a format shown in FIG. 24. In FIG. 24, eight bits are shown as one unit (a line illustrated in the lateral direction). (This also holds true in format diagrams of FIG. 25 and subsequent drawing.) The subunit info response in the AV/C command is defined by a format shown in FIG. 25. Data of opcodes and operands shown in FIGS. 24 and 25 are disposed in the fields of the opcode and operands in the FCP frame included in the packet shown in FIG. 18. In the subunit info status command shown in FIG. 24, subunit info data is disposed as the opcode. Data of a page and an extension code are disposed in an area of an operand [0]. In an area of an operand [1] and subsequent operands, a specific value (here FF) is disposed. In the response for this command, page data is disposed in an area of an operand [1] and subsequent operands as shown in FIG. 25. Areas of the opcode and an operand [0] of the response are the same as those of the command.

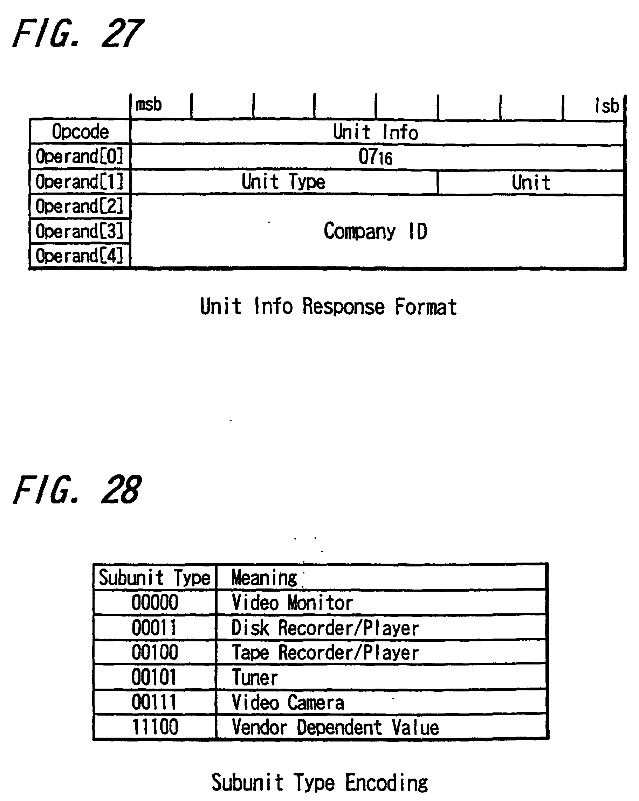

In the example of the flow chart of FIG. 21, the subunit type is inquired to judge the kind of the device. However, the unit type may be inquired. A unit info status command for inquiring about the unit type is defined by a format shown in FIG. 26. A unit info response serving as its answer is defined by a format shown in FIG. 27. In the unit info status command shown in FIG. 26, unit info data is disposed as the opcode. In an area of an operand [0] and subsequent operands, a specific value (here FF) is disposed. In the response for this command, data of the unit type and the unit are disposed in an area of an operand [1] as shown in FIG. 27. Furthermore, in operands [2] to [4], a company ID which is a code provided to each company which has manufactured each device (unit) is disposed.

Some of codes concerning the subunit type prescribed in the AV/C command are shown in FIG. 28. FIG. 28 shows some of the subunit types already shown in FIG. 19, again. Here, video monitor, disc recorder and/or player, tape recorder and/or player, tuner, video camera, and so on are prescribed as subunit types. Furthermore, a subunit type having a special format prescribed for each company is prescribed as a vendor unique value. By judging the data of this subunit type, the controller 13 of the IRD 100 can decide the type of the subunit the device of the opposite party has.

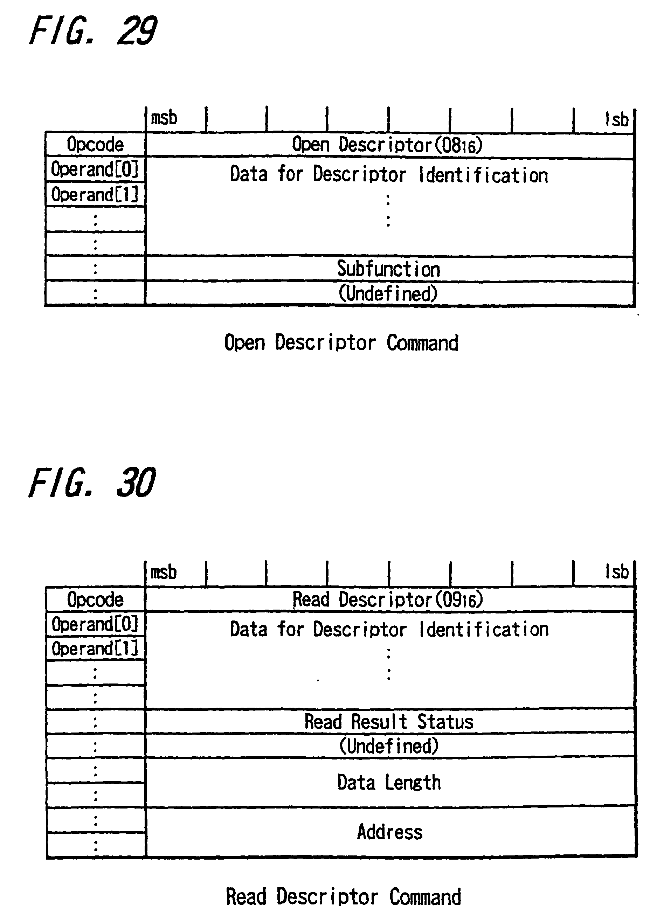

In the case of the AV/C command, a command for opening the descriptor (open descriptor command) required after a decision of the subunit type has been made if the decided type is "disc" is prescribed in a format shown in FIG. 29. In this open descriptor command, data indicating an open descriptor is disposed as the opcode, and data for descriptor identification and data of subfunction are disposed as the operands. In the case of the ÀV/C command, a command for reading out the descriptor (read descriptor command) after the descriptor has been opened by the open descriptor command is prescribed in a format shown in FIG. 30. In this read descriptor command, data indicating a read descriptor is disposed as the opcode, and data for descriptor identification, data of read result status, data length, and data of read address are disposed as the operands.

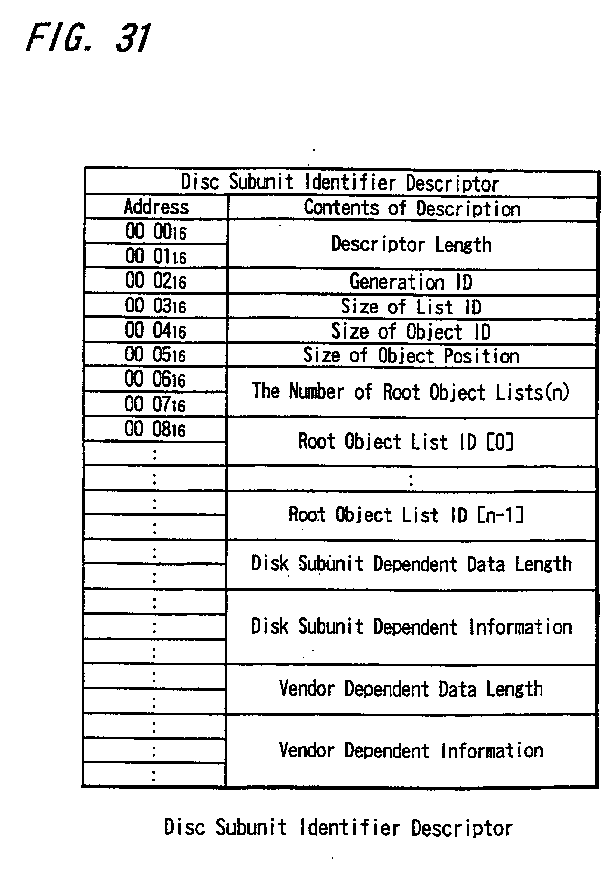

FIG. 31 is a diagram showing a configuration example of a descriptor of a disc type subunit in the AV/C command read out by the above described command. The descriptor has data of a hierarchical structure. An example of a disc subunit identifier descriptor is shown in FIG. 31. For example, a descriptor length, a generation ID, a size of a list ID, a size of an object ID, a size of an object position, the number of root object lists, a root object list ID, a data length of data unique to the disc subunit, information unique to the disc subunit, a data length of data unique to a manufacturing maker, and information unique to the manufacturing maker are disposed. As for the root object list IDs, as many root object list IDs as indicated by the data of the number of root object lists are disposed.

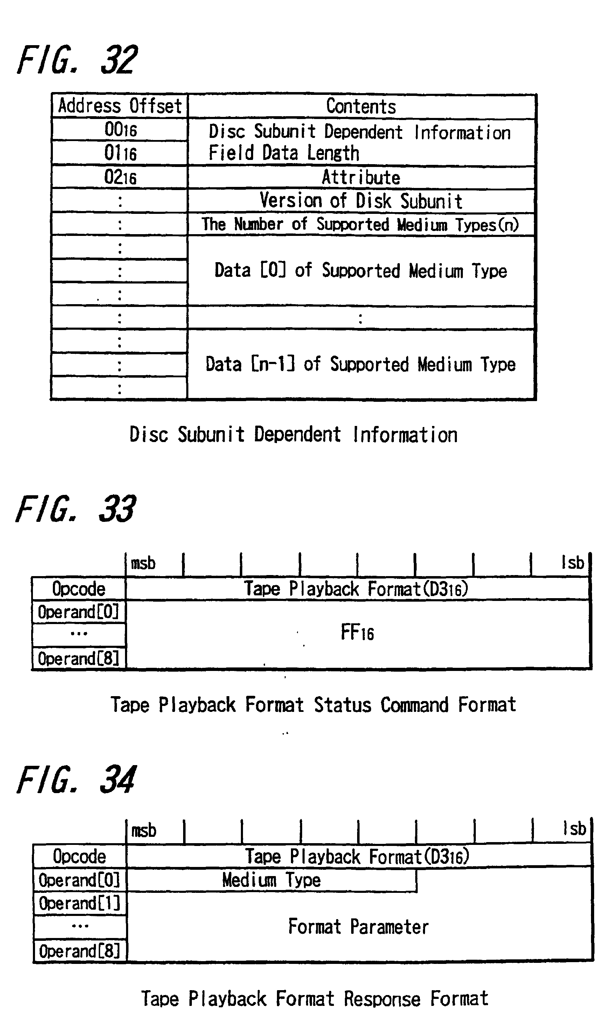

As for data of disc subunit dependent information which is information unique to a disk subunit contained in the disk subunit identifier descriptor, it has a configuration shown in FIG. 32. An address offset shown in FIG. 32 is an offset value of an address from an operand in which the head portion of the data of the disc subunit dependent information is disposed. As the information, a data length of an information field unique to the disk subunit, an attribute, a version of the disk subunit, the number of supported medium types, and data of supported medium type are disposed. As for the data of supported medium type, as many data of supported medium type as indicated by the number of supported medium types are disposed. In the data of supported medium type, details of the medium format are indicated. In the case of the present example, it is known from the data that the device is a disc device which uses a disc having a format of an MD (mini disc) as the medium.

Furthermore, a format of a data structure of a status command having a TAPE PLAYBACK FORMAT for inquiring the tape playback format required after the decision of the subunit type if the decided type is tape is shown in FIG. 33. In this command, data of the tape playback format is disposed in the opcode, and a specific value (here FF) is disposed in the operands.

And the format of a response for this status command is shown in FIG. 34. In this response, a medium type and data of format parameters are disposed in the area of the operands. The response at this time is indicated by one of response types already shown in FIG. 19. To be concrete, a response for a status command in the AV/C command is one of "NOT IMPLEMENTED", "REJECTED", "IN TRANSACTION", and "STABLE".

In the case of a DVCR having a format of a D-VHS corresponding to the AV/C command, the response does not become "NOT IMPLEMENTED" which is a response disabling the answer to transmission of the status command. Depending on the device state at that time, the response becomes one of "REJECTED", "IN TRANSITION", and "STABLE". By judging the response to be other than "NOT IMPLEMENTED", the device is known to be a DVCR having a format of the D-VHS. In the case of a tape device of a different format (such as a DVCR called DV standard), a status command of the TAPE PLAYBACK FORMAT is not implemented in the AV/C command, and consequently the response becomes "NOT IMPLEMENTED" for which answering is impossible.

When a network system has been formed by connecting devices controlled by the AV/C command to the bus 1, it is possible to know details of the kinds, such as types and medium formats, of the devices, without previously knowing which protocols the devices connected to the network correspond to, by conducting the processing described heretofore with reference to the present embodiment. It becomes possible to execute functions which can be executed only for devices having specific medium formats connected to the network, without user's operation of setting the device type and so on

After the kinds and so on of the devices have been judged, it is necessary in some cases to collect detailed data concerning the devices. If altered devices are judged to exist in those devices by comparison with previously stored data, then only data concerning the altered devices are read out. As a result, the burden and the processing tune required to collect data concerning the devices connected to the network can be reduced.

In the above described embodiment, the subunit type is first inquired by using the subunit info command, in order to determine whether a device connected to the network corresponds to the AV/C command. However, the protocol and command set used by the device connected to the network may be ascertained by different processing.

For example, it may be determined from the data of the configuration ROM a node (unit) connected to the network has whether the device corresponds to the AV/C command. In other words, data concerning the unit attribute of the configuration ROM prescribed by, for example, IEEE 1212 has a data configuration of a format shown in FIG. 33. By a combination of data of unit spec id and data of unit sw version included in the data concerning the unit attribute, the corresponding protocol and command set are determined as shown in FIG. 34. To be concrete, it is known from these data which of, for example, the standard of AV/C command standardized by 1394TA, standard of common application language (CAL) standardized by 1394TA, standard of Europe home system (EHS) standardized by 1394TA, and standard of ANSI the protocol and command set conform to. When it is known from the correspondence between data of the unit ID and data of the unit SW version that the protocol and command set correspond to the AV/C command, details of the unit may be inquired.

Furthermore, after judging the protocol and command set to correspond to the AV/C command from the correspondence shown in FIG. 34, the processing of the step S12 and subsequent steps of the flow chart shown in FIG. 21, i.e., the processing of sending the status command of the subunit and subsequent processing may be executed.

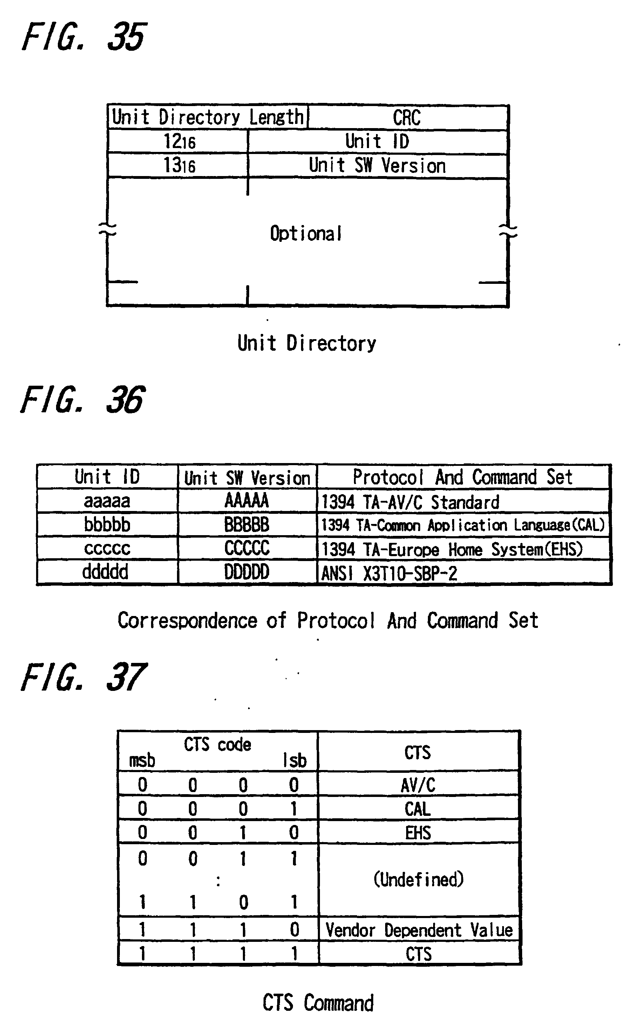

Furthermore, in the case where it is determined from different data whether the connected device corresponds to the AV/C command and in the decision the connected device is judged to correspond to the AV/C command, the detailed subunit type and medium format may be inquired. For example, as shown in FIG. 35, a code value of the CTS command is determined . It may be determined whether the connected device corresponds to the AV/C command on the basis of the code value of the CTS command. The code value of the CTS command is disposed in a four-bit section (a portion represented as 0000) located at head of a FCP frame shown in FIG. 18. In this case, when the code value of the CTS command is "0000", it is known that the connected device corresponds to the AV/C command.

Furthermore, each data of the configuration ROM prescribed by the IEEE 1212 is provided with a key ID as shown in FIG. 36. By reading the data of the model ID included in the key ID, details such as the type of the device may be judged directly.

Furthermore, in the above described embodiment, the processing is conducted when the IRD 100 connected to the bus 1 collects data of devices included in the network formed by the bus 1. As a matter of course, however, the present invention may also be applied to the case where any device collects data in the network.

Furthermore, in the above described embodiment, the device kind discrimination processing shown in the flow chart of FIG. 21 is conducted and thereafter the device data collection processing shown in the flow chart of FIG. 22 is conducted. Not after the device kind discrimination processing is conducted, but when data specifying the device connected to the network (such as the node unique ID) is detected, the device data collection processing shown in the flow chart of FIG. 22 may be conducted.

Furthermore, in the above described embodiment, the case of the network formed by the bus of the IEEE 1394 scheme has been described. However, the present invention can also be applied to the case where data concerning devices are collected in a different network configuration.

## Claims

1. A network connection recognition method for recognizing a device connected to a predetermined network, comprising:
a device recognition step of recognizing a device connected to said network;
a data acquisition step of acquiring predetermined data from said recognized device; and
a comparison step of comparing said predetermined data obtained from said recognized device with predetermined data previously collected and stored,
wherein when in said comparison step said predetermined data obtained from said recognized device has coincided with predetermined data previously collected and stored, data concerning a device corresponding to said stored predetermined data is utilized as data concerning said recognized device.

2. The network connection recognition method according to claim 1, wherein said predetermined data is an identifier capable of identifying each device individually.

3. The network connection recognition method according to claim 1, comprising:
a data collection step of collecting data concerning said device when in said comparison step said predetermined data obtained from said recognized device has not coincided with predetermined data previously collected and stored.

4. The network connection recognition method according to claim 3, wherein said data collection step comprises:
an inquiry command sending step of sending a command for inquiring a unit type or a subunit type to said device; and
a discriminating step of discriminating the unit type or the subunit type of said device based on a response from said device.

5. The network connection recognition method according to claim 4, wherein said data collection step further comprises:
a type corresponding command sending step of sending a command corresponding to said discriminated type; and
a device kind determining step for determining the device kind based on a response obtained by the type corresponding command sending step.

6. The network connection recognition method according to claim 1, wherein said device recognition step of recognizing a device connected to said network is conducted when a bus line forming said network is reset.

7. The network connection recognition method according to claim 1, comprising:
data deleting step of deleting said stored predetermined data when predetermined data previously collected and stored does not coincide with any of said predetermined data obtained from said recognized device.

8. The network connection recognition method according to claim 1, comprising:
data deleting step of deleting data concerning a device corresponding to said stored predetermined data when predetermined data previously collected and stored does not coincide with any of said predetermined data obtained from said recognized device.

9. A network connection terminal device connected to a predetermined network, comprising:
a storage section for storing data concerning a device connected via said network; and
a control section responsive to recognition of a device connected via said network, for comparing predetermined data transmitted from the device with data stored in said storage section, causing data concerning devices incurring noncoincidence in the comparison to be transmitted, and causing storage data of said storage section to be updated.

10. A network connection terminal device connected to a predetermined network, comprising:
device recognition means for recognizing a device connected to said network;
data acquisition means for acquiring predetermined data front said recognized device; and
comparison means for comparing said predetermined data obtained from said recognized device with predetermined data previously collected and stored,
wherein when in said comparison means said predetermined data obtained from said recognized device has coincided with predetermined data previously collected and stored, data concerning a device corresponding to said stored predetermined data is utilized as data concerning said recognized device.

11. The network connection terminal device according to claim 10, wherein said predetermined data is an identifier capable of identifying each device individually.

12. The network connection terminal device according to claim 10, comprising:
command output means for generating and outputting a first command to inquire of a device connected via said network about a unit type or a subunit type; and
discrimination means for receiving a response to said first command, and discriminating a unit type or a subunit type of said device based on said response.

13. The network connection terminal device according to claim 12, comprising:
command output means for generating and outputting a second command corresponding to a unit type or a subunit type of said device; and
receiving means for receiving a response to said second command from said device.

14. The network connection terminal device according to claim 10, wherein said device recognition means conducts processing for recognizing a device connected via said network when said device recognition means has detected that a bus line forming said network is reset.
